# EUROPEAN PATENT APPLICATION

(11) **EP 1 811 519 A2**
(43) Date of publication of application: **25.07.2007**
(21) Application number: 07100762.9
(22) Date of filing: 18.01.2007
(51) Int. Cl.: G11B 20/00, G11B 20/10, G11B 27/034

(54) **Recording apparatus, recording method, program, encoding apparatus, and encoding method**

(30) Priority: 19.01.2006 JP 2006010719
(71) Applicant: SONY CORPORATION, Tokyo (JP)
(72) Inventor: Hirai, Jun, Shinagawa-ku Tokyo (JP)
(74) Representative: Melzer, Wolfgang

(57) **Abstract**

A recording apparatus is disclosed which includes: a linking section configured to link one of a plurality of modes either to an input terminal through which to input a content or to an input encoding format for encoding the input content in accordance with a command from a user, each of the modes being used to determine either a record encoding format for encoding the content upon recording or a bit rate for recording the content; a determination section configured to determine the mode appropriate for the content based on the mode linked either to the input terminal or to the input encoding format and in keeping with either the input terminal or the input encoding format; and an encoding control section configured to control encoding of the input content by use of either the record encoding format or the bit rate designated by the determined mode.

## Description

### CROSS REFERENCES TO RELATED APPLICATIONS

The present invention contains subject matter related to Japanese Patent Application JP 2006-010719 filed with the Japanese Patent Office on January 19, 2006, the entire contents of which being incorporated herein by reference.

### BACKGROUND OF THE INVENTION

### 1. Field of the Invention

The present invention relates to a recording apparatus, a recording method, a program, an encoding apparatus, and an encoding method. More particularly, the invention relates to a recording apparatus, a recording method, a program, an encoding apparatus, and an encoding method for encoding contents.

### 2. Description of the Related Art

Recorders for recording such contents as moving pictures, still images and sounds to recording media including hard disks are extensively used at present.

In many cases, the content of interest is encoded and compressed before being recorded. Some recorders are designed to change compression ratio depending on the type of content (as disclosed in the Pamphlet of PCT Patent Publication No. 95/21504).

### SUMMARY OF THE INVENTION

In the past, when encoding the content to be recorded, the user directly designated the encoding format and bit rate for the content in question. However, those users who had little or no understanding of encoding format and bit rate found it difficult and troublesome to designate these settings properly.

The present invention has been made in view of the above circumstances and provides arrangements whereby the content of interest is encoded in a suitable format and/or at an appropriate bit rate simply and easily.

In carrying out the present invention and according to one embodiment thereof, there is provided a recording apparatus including: a linking section configured to link one of a plurality of modes either to an input terminal through which to input a content or to an input encoding format for encoding the input content in accordance with a command from a user, each of the modes being used to determine either a record encoding format for encoding the content upon recording or a bit rate for recording the content; a determination section configured to determine the mode appropriate for the content based on the mode linked either to the input terminal or to the input encoding format and in keeping with either the input terminal or the input encoding format; and an encoding control section configured to control encoding of the input content by use of either the record encoding format or the bit rate designated by the determined mode.

Preferably, the recording apparatus may further include a recording control section configured to control recording of the input content either in a predetermined encoding format or in the input encoding format; wherein the encoding control section may control encoding of the recorded content either in the record encoding format or at the bit rate.

Preferably, each of the modes may designate the number of pixels for the content to be recorded; and the recording apparatus may further include a signal processing section configured to subject the content to signal processing in such a manner as to attain the number of pixels designated by the determined mode.

The record encoding format and the bit rate may preferably be determined by one of the modes in such a manner that the content as a whole will be stored on a content storage medium for storing the content.

The determination section may preferably determine the mode appropriate for the content in accordance with the command from the user.

According to another embodiment of the present invention, there is provided a recording method including the steps of: linking one of a plurality of modes either to an input terminal through which to input a content or to an input encoding format for encoding the input content in accordance with a command from a user, each of the modes being used to determine either a record encoding format for encoding the content upon recording or a bit rate for recording the content; determining the mode appropriate for the content based on the mode linked either to the input terminal or to the input encoding format and in keeping with either the input terminal or the input encoding format; and controlling encoding of the input content by use of either the record encoding format or the bit rate designated by the determined mode.

According to a further embodiment of the present invention, there is provided a program for causing a computer to carry out a procedure including the steps of: linking one of a plurality of modes either to an input terminal through which to input a content or to an input encoding format for encoding the input content in accordance with a command from a user, each of the modes being used to determine either a record encoding format for encoding the content upon recording or a bit rate for recording the content; determining the mode appropriate for the content based on the mode linked either to the input terminal or to the input encoding format and in keeping with either the input terminal or the input encoding format; and controlling encoding of the input content by use of either the record encoding format or the bit rate designated by the determined mode.

Where the above-outlined recording apparatus, recording method, or program according to the present invention is in use, one of a plurality of modes is linked either to an input terminal through which to input a content or to an input encoding format for encoding the input content in accordance with a command from a user, each of the modes being used to determine either a record encoding format for encoding the content upon recording or a bit rate for recording the content. The mode appropriate for the content is determined based on the mode linked either to the input terminal or to the input encoding format and in keeping with either the input terminal or the input encoding format. Encoding of the input content is then controlled by use of either the record encoding format or the bit rate designated by the determined mode.

According to an even further embodiment of the present invention, there is provided an encoding apparatus including: a linking section configured to link one of a plurality of modes either to an input terminal through which to input a content or to an input encoding format for encoding the input content in accordance with a command from a user, each of the modes being used to determine either a record encoding format for encoding the content upon recording or a bit rate for recording the content; a determination section configured to determine the mode appropriate for the content based on the mode linked either to the input terminal or to the input encoding format and in keeping with either the input terminal or the input encoding format; and an encoding control section configured to control encoding of the input content by use of either the record encoding format or the bit rate designated by the determined mode.

Preferably, the encoding apparatus may further include a transmission control section configured to control transmission of the encoded content over a network to a recording apparatus for recording the content.

According to a still further embodiment of the present invention, there is provided an encoding method including the steps of: linking one of a plurality of modes either to an input terminal through which to input a content or to an input encoding format for encoding the input content in accordance with a command from a user, each of the modes being used to determine either a record encoding format for encoding the content upon recording or a bit rate for recording the content; determining the mode appropriate for the content based on the mode linked either to the input terminal or to the input encoding format and in keeping with either the input terminal or the input encoding format; and controlling encoding of the input content by use of either the record encoding format or the bit rate designated by the determined mode.

Where the above-outlined encoding apparatus or encoding method is in use, one of a plurality of modes is also linked either to an input terminal through which to input a content or to an input encoding format for encoding the input content in accordance with a command from a user, each of the modes being used to determine either a record encoding format for encoding the content upon recording or a bit rate for recording the content. The mode appropriate for the content is determined based on the mode linked either to the input terminal or to the input encoding format and in keeping with either the input terminal or the input encoding format. Encoding of the input content is then controlled by use of either the record encoding format or the bit rate designated by the determined mode.

The present invention in the form of the recording apparatus, recording method, or program outlined above allows contents to be encoded upon recording.

The inventive recording apparatus, recording method, or program makes it simple and easy to encode contents in an appropriate encoding format or at a suitable bit rate when they are recorded.

The present invention in the form of the encoding apparatus or encoding method outlined above allows contents to be encoded.

The inventive encoding apparatus or encoding method makes it simple and easy to encode contents in an appropriate encoding format or at a suitable bit rate.

### BRIEF DESCRIPTION OF THE DRAWINGS

Fig. 1 is a block diagram showing a configuration of a recording and reproducing system embodying the present invention;
Fig. 2 is a block diagram showing a more detailed configuration of the recording and reproducing system;
Fig. 3 is a tabular view explanatory of information for use by the recording and reproducing system;
Fig. 4 is a schematic view explanatory of cache files recorded to a HDD;
Fig. 5 is a schematic view explanatory of how cache files are recorded to the HDD and how content data is read out by use of the cache files;
Fig. 6 is a schematic view explanatory of a cache file in a stub file state;
Fig. 7 is a schematic view explanatory of areas and of area information as part of extended attributes;
Fig. 8 is a flowchart of steps constituting the process for writing hint information;
Fig. 9 is a flowchart of steps constituting the process for creating a cache file in the stub file state;
Fig. 10 is a flowchart of steps constituting the process for reading data from an index_n;
Fig. 11 is a flowchart of detailed steps constituting a reloading process;
Fig. 12 is a block diagram showing another configuration of the recording and reproducing system embodying the present invention;

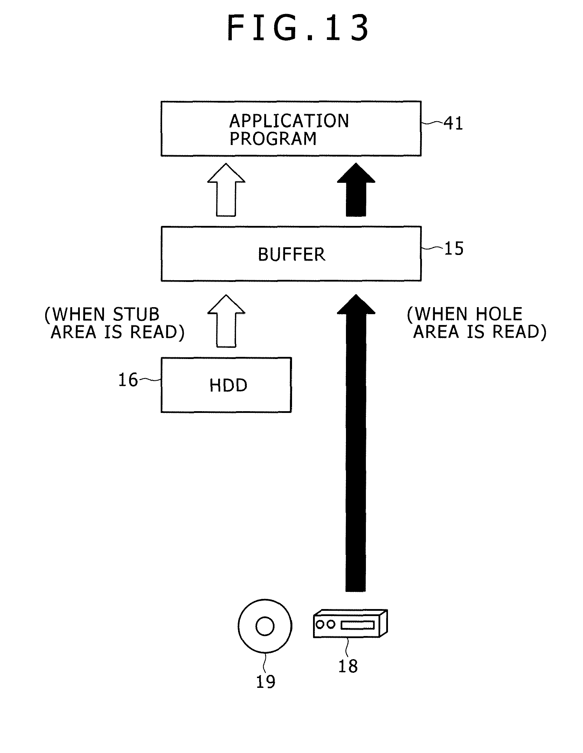

Fig. 13 is a schematic view explanatory of how content data is read out by use of a cache file;
Fig. 14 is a flowchart of other steps constituting the process for reading data from the index_n;
Fig. 15 is a block diagram showing a typical structure of a video/audio encoder;
Fig. 16 is a block diagram showing a typical structure of a video/audio decoder;
Fig. 17 is a block diagram showing a typical structure of an application program;
Fig. 18 is a schematic view explanatory of how contents are encoded;
Fig. 19 is a flowchart of steps constituting a recording process;
Fig. 20 is a flowchart of steps constituting a mode linking process;
Fig. 21 is a flowchart of steps constituting a content mode determining process;
Fig. 22 is a flowchart of steps constituting a content recording process;
Fig. 23 is a flowchart of steps constituting a content encoding format converting process;
Fig. 24 is a flowchart of steps constituting another content encoding format converting process;
Fig. 25 is a flowchart of steps constituting a recompressing process;
Fig. 26 is a block diagram showing a further configuration of the recording and reproducing system embodying the present invention;
Fig. 27 is a block diagram showing an even further configuration of the recording and reproducing system embodying the present invention;
Fig. 28 is a block diagram showing another typical structure of the application program; and
Fig. 29 is a block diagram showing a typical structure of a personal computer.

### DETAILED DESCRIPTION OF THE PREFERRED EMBODIMENTS

What is described below as the preferred embodiments of the present invention with reference to the accompanying drawings corresponds to the appended claims as follows: the description of the preferred embodiments basically provides specific examples supporting what is claimed. If any example of the invention described below as a preferred embodiment does not have an exactly corresponding claim, this does not means that the example in question has no relevance to the claims. Conversely, if any example of the invention described hereunder has a specifically corresponding claim, this does not mean that the example in question is limited to that claim or has no relevance to other claims.

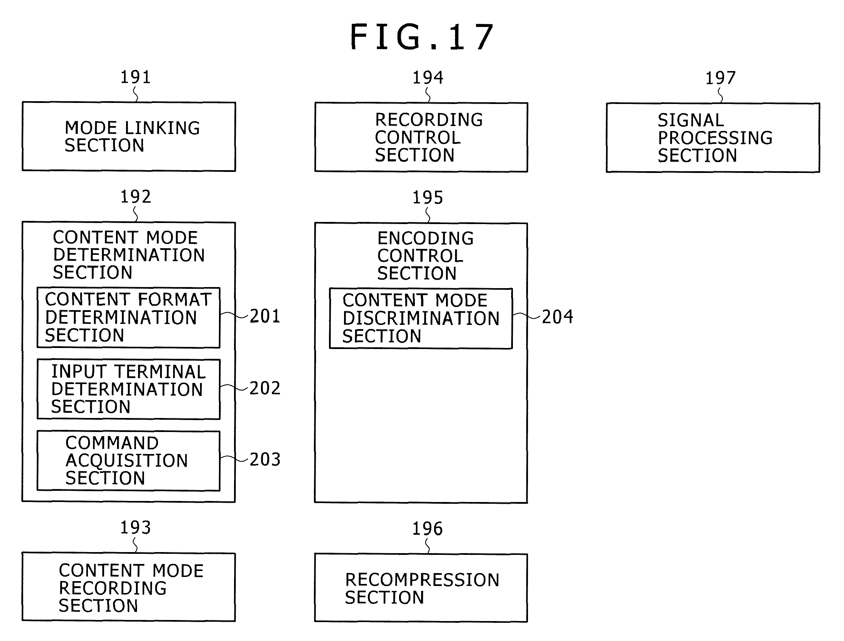

One embodiment of the present invention is a recording apparatus which includes: a linking section (e.g., mode linking section 191 in Fig. 17) configured to link one of a plurality of modes either to an input terminal through which to input a content or to an input encoding format for encoding the input content in accordance with a command from a user, each of the modes being used to determine either a record encoding format for encoding the content upon recording or a bit rate for recording the content; a determination section (e.g., content mode determination section 192 in Fig. 17) configured to determine the mode appropriate for the content based on the mode linked either to the input terminal or to the input encoding format and in keeping with either the input terminal or the input encoding format; and an encoding control section (e.g., encoding control section 195 in Fig. 17) configured to control encoding of the input content by use of either the record encoding format or the bit rate designated by the determined mode.

Preferably, the recording apparatus may further include a recording control section (e.g., recording control section 194 in Fig. 17) configured to control recording of the input content either in a predetermined encoding format or in the input encoding format; wherein the encoding control section may control encoding of the recorded content either in the record encoding format or at the bit rate.

Preferably, each of the modes may designate the number of pixels for the content to be recorded; and the recording apparatus may further include a signal processing section (e.g., signal processing section 197 in Fig. 17) configured to subject the content to signal processing in such a manner as to attain the number of pixels designated by the determined mode.

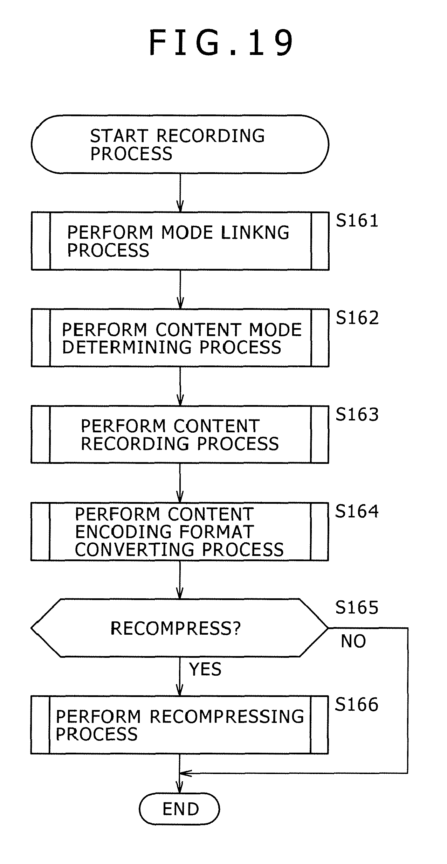

Another embodiment of the present invention is a recording method or a program including the steps of: linking (e.g., in step S161 of Fig. 19) one of a plurality of modes either to an input terminal through which to input a content or to an input encoding format for encoding the input content in accordance with a command from a user, each of the modes being used to determine either a record encoding format for encoding the content upon recording or a bit rate for recording the content; determining (e.g., in step S162 of Fig. 19) the mode appropriate for the content based on the mode linked either to the input terminal or to the input encoding format and in keeping with either the input terminal or the input encoding format; and controlling (e.g., in step S164 of Fig. 19) encoding of the input content by use of either the record encoding format or the bit rate designated by the determined mode.

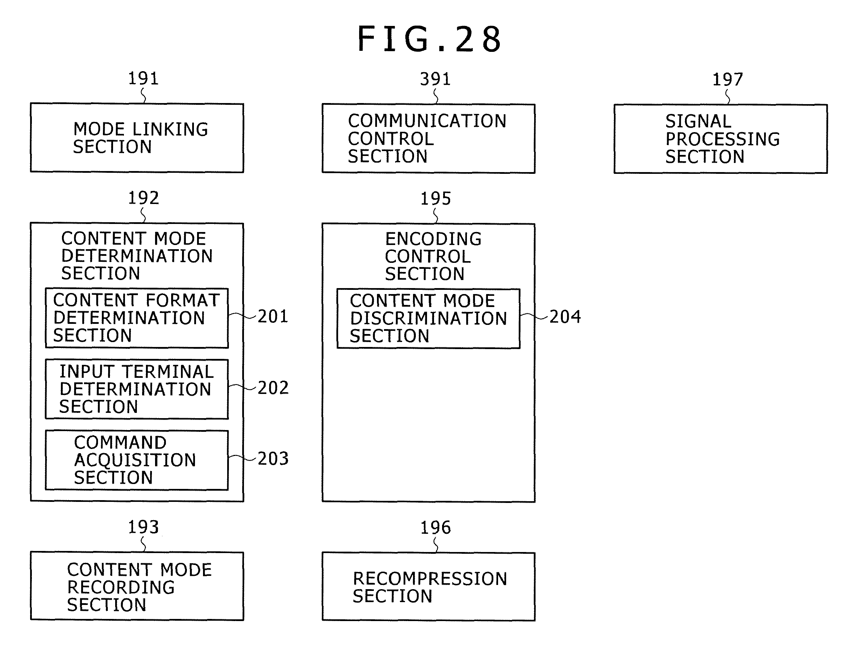

A further embodiment of the present invention is an encoding apparatus which includes: a linking section (e.g., mode linking section 191 in Fig. 28) configured to link one of a plurality of modes either to an input terminal through which to input a content or to an input encoding format for encoding the input content in accordance with a command from a user, each of the modes being used to determine either a record encoding format for encoding the content upon recording or a bit rate for recording the content; a determination section (e.g., content mode determination section 192 in Fig. 28) configured to determine the mode appropriate for the content based on the mode linked either to the input terminal or to the input encoding format and in keeping with either the input terminal or the input encoding format; and an encoding control section (e.g., encoding control section 195 in Fig. 28) configured to control encoding of the input content by use of either the record encoding format or the bit rate designated by the determined mode.

Preferably, the encoding apparatus may further include a transmission control section (e.g., communication control section 391 in Fig. 28) configured to control transmission of the encoded content over a network to a recording apparatus for recording the content.

An even further embodiment of the present invention is an encoding method including the steps of: linking (e.g., in step S161 of Fig. 19) one of a plurality of modes either to an input terminal through which to input a content or to an input encoding format for encoding the input content in accordance with a command from a user, each of the modes being used to determine either a record encoding format for encoding the content upon recording or a bit rate for recording the content; determining (in step S162 of Fig. 19) the mode appropriate for the content based on the mode linked either to the input terminal or to the input encoding format and in keeping with either the input terminal or the input encoding format; and controlling (e.g., in step S164 of Fig. 19) encoding of the input content by use of either the record encoding format or the bit rate designated by the determined mode.

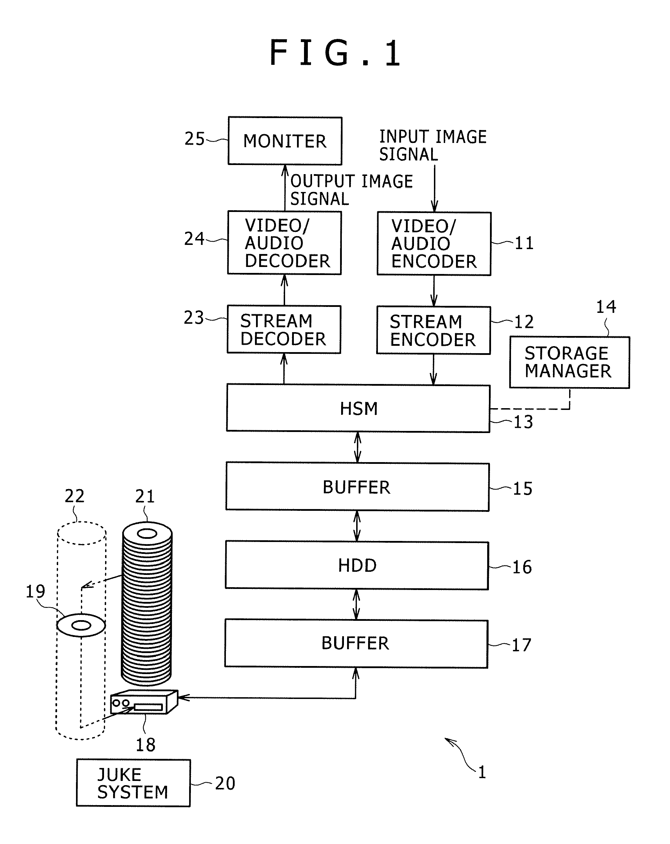

Fig. 1 is a block diagram showing a typical configuration of a recording and reproducing system 1 practiced as one embodiment of the present invention.

The recording and reproducing system 1 records and reproduces diverse kinds of contents including moving pictures, still images and sounds. The recording reproducing system 1 is made up of a video/audio encoder 11, a stream encoder 12, a hierarchical storage management (HSM) 13, a storage manager 14, a buffer 15, a hard disk drive (HDD) 16, a buffer 17, a drive 18, optical disks 19, a juke system 20, disk slots 21, a picker 22, a stream decoder 23, and a video/audio decoder 24.

The video/audio encoder 11 encodes baseband video data constituted by an input video signal using one of three formats: one based on the DV (Digital Video) standard, one according to the MPEG (Moving Pictures Experts Group) standard, and one in accordance with the H.264/AVC (MPEG-4 Part 10 Advanced Video Coding) standard.

H.264 is a moving picture compression standard worked out by the Video Coding Experts Group under ITU-T (Telecommunication Sector of International Telecommunication Union). In the description that follows, the format based on the H.264/AVC standard will be simply referred to as the AVC format.

The video/audio encoder 11 encodes baseband audio data formed by an input audio signal (not shown) in a format compatible with the video data encoding standard in use. The video/audio encoder 11 forwards the encoded data to the stream encoder 12.

The stream encoder 12 multiplexes the encoded data coming from the video/audio encoder 11 for conversion into a transport stream or a program stream. The stream acquired through the conversion is supplied to the HSM 13.

The HSM 13 manages the hierarchical recording of content data to recording media (i.e., it can also be said that the HSM 13 manages recording of content data onto hierarchically structured recording media). Under control of the storage manager 14, the HSM 13 allows the stream coming from the stream encoder 12 to reach the HDD 16 via the buffer 15. The HDD 16 is a typical high-speed primary storage that records the stream (i.e., data) fed from the HSM 13 through the buffer 15 under control of the HSM 13. The HDD 16 further supplies the recorded stream (data) to the buffer 15 or 17.

The buffer 15 is constituted by a semiconductor memory or by part of the recording space of the HDD 16. In operation, the buffer 15 temporarily accommodates the stream (data) coming from the HSM 13 or HDD 16 and sends the buffered stream (data) to the HSM 13 or HDD 16. The buffer 17 is constituted by a semiconductor memory or by part of the recording space of the HDD 16. The buffer 17 temporarily retains the stream (data) coming from the HDD 16 or drive 18 and forwards the buffered stream (data) to the HDD 16 or drive 18.

Through their workings, the buffers 15 and 17 absorb read jitters so as to keep data rate constant.

The drive 18 records data coming from the buffer 17 to a mounted optical disk 19 as a file. The optical disk 19 is a typical low-speed secondary storage such as the MO (magneto-optical disk), DVD (digital versatile disc), CD (compact disc), or Blu-ray disc (registered trademark).

The juke system 20 controls mounting and unmounting of an optical disk 19 to and from the drive 18. Specifically, the juke system 20 causes the picker 22 to select one of a plurality of optical disks 19 housed in the disk slots 21. Under control of the juke system 20, the picker 22 transports the selected optical disk 19 from the disk slots 21 before mounting the disk to the drive 18. Also under control of the juke system 20, the picker 22 transports the optical disk 19 unmounted from the drive 18 and places the disk into one of the disk slots 21. This is how the juke system 20 controls the picker 22.

From the mounted optical disk 19, the drive 18 reads data as a file and supplies the retrieved data to the buffer 17. The data read from the optical disk 19 is sent through the buffer 17 to the HDD 16 for recording to the HDD 16.

By way of the buffer 15, the HSM 13 reads from the HDD 16 the data (stream) that was retrieved from the optical disk 19 and recorded to the HDD 16. The retrieved data (stream) is sent to the stream decoder 23.

The stream decoder 23 separates the transport stream or program stream into video and audio data. The separated video data and audio data are sent from the stream decoder 23 to the video/audio decoder 24.

The video/audio decoder 24 decodes the encoded video and audio data into so-called baseband video and audio data. From the decoded baseband video and audio data, the video/audio decoder 24 acquires an output video signal and an audio signal (not shown) and supplies the acquired signals to a monitor 25. The monitor 25 displays images corresponding to the output video signal and outputs sounds based on the supplied audio signal.

When the video/audio encoder 11 records a content, all data of the content corresponding to the input video signal is recorded to the HDD 16. During idle time of the drive 18, all data making up the content recorded on the HDD 16 is copied onto the optical disk 19. At this point, the HSM 13 records to a store database (to be described later) information indicating which content data has been written to which optical disk 19. This information, as will be discussed later in more detail, includes information for identifying the files in which content data is stored, information for identifying the optical disk 19 that holds all data constituting each content, dates and times at which data was written, and the names of the files holding the content data.

It is possible to record a stream that has been directly input from outside. It is also possible to output the stored stream to the outside.

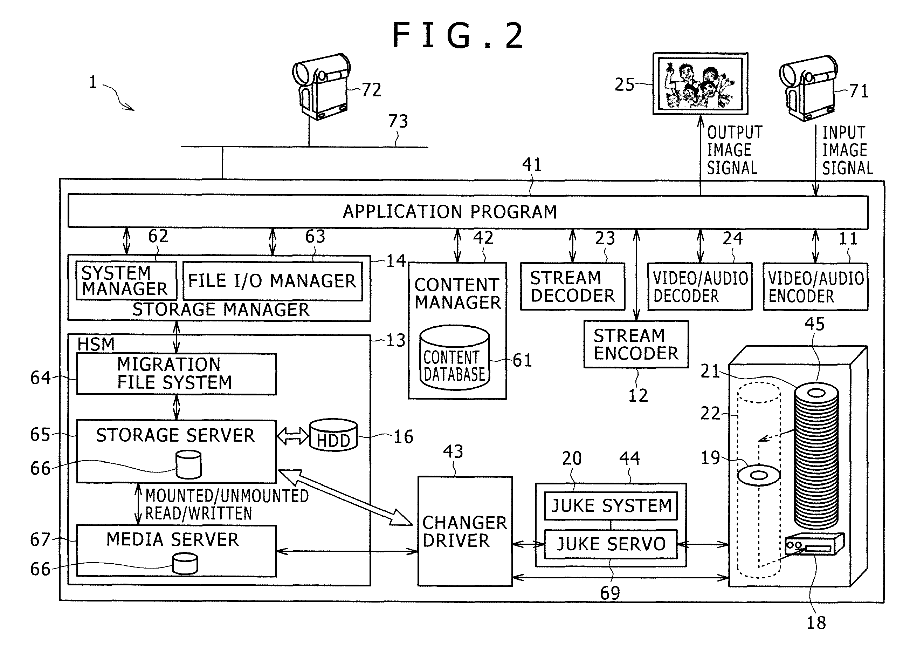

Fig. 2 is a block diagram showing a more detailed configuration of the recording and reproducing system 1.

The recording and reproducing system 1 further includes an application program 41, a content manager 42, a changer driver 43, a jukebox control device 44, and a jukebox 45. The jukebox control device 44 includes the juke system 20. The jukebox 45 is made up of the drive 18, optical disks 19, disk slots 21, and picker 22.

The application program 41 has a user interface capability to communicate with the user. Through the interface, the application program 41 acquires commands from the user and notifies the user of diverse kinds of information about the recording and reproducing system 1. The application program 41 controls the recording and reproducing system 1 as a whole.

Illustratively, the application program 41 controls the video/audio encoder 11, stream encoder 12, video/audio decoder 24, stream decoder 23, content manager 42, and storage manager 14 in response to the user's operations. The application program 41 acquires an input video signal and an audio signal from a video camera 71 and supplies the acquired input video signal and audio signal to the video/audio encoder 11. The application program 41 further acquires an input video signal and an audio signal from a video camera 77 over a network 73 and forwards the acquired input video signal and audio signal to the video/audio encoder 11.

The application program 41 also acquires an output video signal and an audio signal from the video/audio decoder 24 and sends the acquired output video signal and audio signal to the monitor 25. Furthermore, the application program 41 supplies the stream decoder 23 with the stream (data) that was sent from the HSM 13 via the storage manager 14.

The content manager 42 manages the contents recorded by the recording and reproducing system 1 and makes searches through the recorded contents. The content manager 42 further controls the recording of diverse kinds of content-related information to a content database (DB) 61 and the retrieval of content-related information from the content database 61.

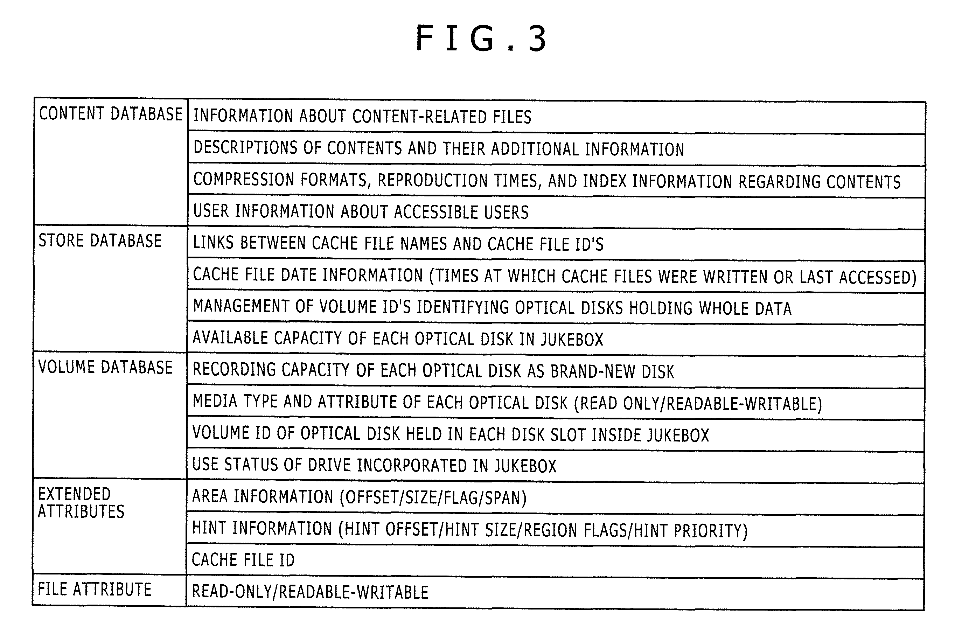

As shown in Fig. 3, the content database 61 stores such content-related information as information about content-related files (e.g., files names, path names); descriptions of contents and their additional information (e.g., content names, content genres); compression formats (encoding formats), reproduction times, and index information (e.g., indexed locations in contents) regarding the contents; and user information about accessible users (e.g., user's names, passwords).

The storage manager 14 controls the HSM 13 hierarchically from above. That is, the storage manager 14 controls the HSM 13 on the basis of requests coming from the application program 41. The storage manager 14 includes a system manager 62 and a file I/O manager 63.

The system manager 62 makes system settings related to storage control, records a system log, manages an error log, and carries out maintenance processes. The file I/O manager 63 accepts from the application program 41 the request to read or write files. The file I/O manager 63 orders that a designated part of an image or music content recorded on the HDD 16 is to be converted to a stub file (state). The file I/O manager 63 also orders that the reading of data from the optical disk 19 out to the HDD 16 (i.e., reloading, to be discussed later) is to be stopped or resumed. The file I/O manager 63 further orders that the writing of data from the HDD 16 to the optical disk 19 is to be stopped or resumed.

The HSM 13 turns the HDD 16, drive 18, optical disks 19, juke system 20, disk slots 21, and picker 22 into virtual storage, and controls temporary recording of content data onto the HDD 16. The HSM 13 is constituted by a migration file system 64, a storage server 65, a store database (DB) 66, a media server 67, and a volume database (DB) 68.

The migration file system 64 manages and rewrites the extended attributes of the files being managed by the HSM 13. The migration file system 64 also manages access events to the files managed by the HSM 13. Furthermore, the migration file system 64 controls reading of data from the optical disk 19 out to the HDD 16 and writing of data from the HDD 16 to the optical disk 19.

The storage server 65 reads data from the optical disk 19 onto the HDD 16 or writes data from the HDD 16 to the optical disk 19. The storage server 65 manages the recording to the store database 66 of information about the cache file that holds data from the content recorded on the HDD 16, and manages the reading of the cache file-related information from the store database 66. The storage server 65 further manages information about links between the entire content data on the one hand and the optical disks 19 that hold the data on the other hand.

The store database 66 is a database that accommodates information about the cache files which retain content data and which are recorded on the HDD 16.

As shown in Fig. 3, the store database 66 holds links between the names of the cache files recorded on the HDD 16 on the one hand, and the cache file ID's identifying the cache files on the other hand. The store database 66 also holds cache file date information indicating the times at which cache files were written or last accessed, and volume ID's identifying the optical disks 19 on which the whole data is retained. Furthermore, the store database 66 records the available capacity of each optical disk 19 in the jukebox 45.

The media server 67 manages the optical disks 19 held in their respective disk slots 21. The media server 67 requests the changer driver 43 to mount the designated optical disk 19 onto the drive 18. The media server 67 also requests the changer driver 43 to unmount the optical disk 19 from the drive 18 back into the disk slots 21.

The volume database 68 provided in the media server 67 retains information about the optical disks 19.

As shown in Fig. 3, the volume database 68 records the recording capacity of each optical disk 19 in its state of a brand-new disk, and the media type (MO (magneto-optical disk), DVD (digital versatile disk)-R, DVD+R, DVD+R DL, DVD-RW, DVD+RW, or DVD-RAM) and attribute (read-only/readable-writable) of each optical disk 19. The volume database 68 further retains the volume ID of the optical disk 19 held in each disk slot 21 inside the jukebox 45, and use status of the drive 18 incorporated in the jukebox 45.

The changer driver 43 controls the driver 18. The change driver 43 is also capable of interfacing the jukebox control device 44 with the HSM 13.

The jukebox control device 44 includes the juke system 20 and a juke servo 69. The juke system 20 controls a system made up of the drive 18, optical disks 19, juke system 20, disk slots 21, and picker 22. The juke servo 69 drives the jukebox 45.

The juke box 45 is constituted by the drive 18, optical disks 19, disk slots 21, and picker 22.

It is possible to record in a single database all data held on the content database 61, on the store database 66, and on the volume database 68.

As shown in Fig. 3, the extended attributes of each content include area information about content parts in cache files, hint information indicating which content parts are recorded as cache files on the HDD 16, and cache file IDs. The extended attributes are recorded to the migration file system 64.

Alternatively, the extended attributes of contents may be written and read by a file system as part of the operating system. It is also possible to record the extended attributes to the content database 61.

More specifically, the area information includes an offset denoting an offset value (in bytes) ranging from the beginning of the data of a given content to the beginning of a given content part in a cache file, a size representing the data size of the content part in question, and a flag indicating whether the data of the content part has been stored or the content part has been placed in a so-called hole state, as will be discussed later in detail. The hint information indicates which parts of the content are recorded as cache files on the HDD 16. As such, the hint information includes a hint offset denoting an offset value (in bytes) ranging from the beginning of the data of the content in question to the beginning of each content part, a hint size representing the data size of the content part in question, region flags (to be described later in detail) indicative of part attributes, and a hint priority indicating the priority for the content part to migrate.

Furthermore, as shown in Fig. 3, another attribute of each file for accommodating a given content is recorded by the file system. This attribute constitutes information indicating whether the file in question is a read-only file or a readable-writable file.

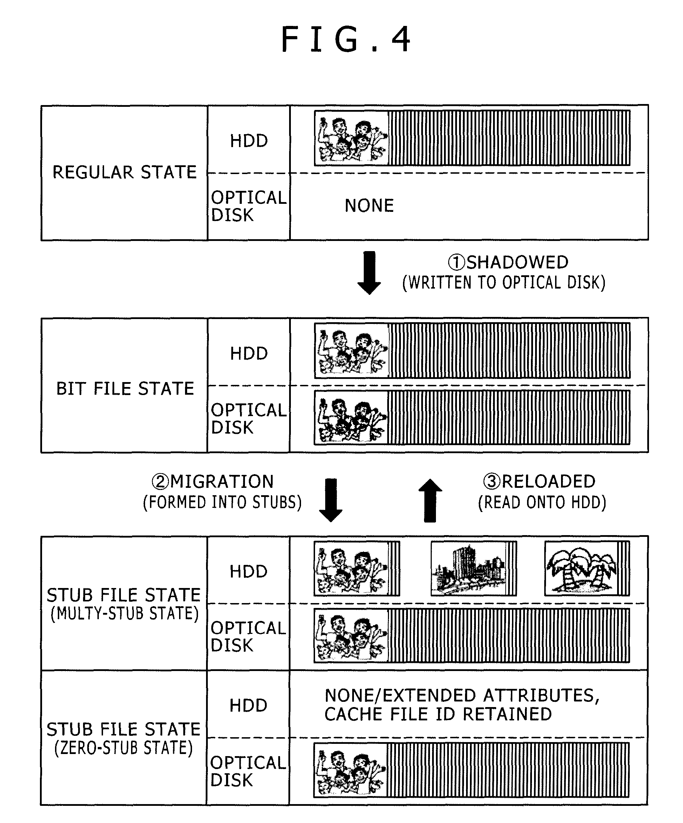

Described below with reference to Figs. 4 through 10 is how cache files are recorded to the HDD 16 and how content data is read by use of these cache files.

Fig. 4 is a schematic view explanatory of cache files recorded to the HDD 16. A content may be encoded by the video/audio encoder 11 and multiplexed by the stream encoder 12 into a stream that is written as a cache file to the HDD 16 (i.e., to its cache area). When the entire data constituting the input stream (content) is recorded as a cache file as shown in Fig. 4, that cache file is said to be in the regular state.

During idle time of the juke box 45, cache files recorded in the regular state to the HDD 16 are shadowed (i.e., written) to the optical disk 19. In this manner, an entire content is recorded not only to the HDD 16 but also to the optical disk 19. Where all data constituting the content is recorded both on the HDD 16 and on the optical disk 19, the cache file of the content is said to be in the bit file state.

When a cache file is in the regular state or in the bit file state, i.e., when the entire stream (all content data) is recorded on the HDD 16, the entire content data can be read from the HDD 16 at high speed. However, the cache file in the regular state or in the bit file state has a large data size. If numerous contents are recorded as cache files in the regular state or in the bit file state on the HDD 16, the recording space of the HDD 16 will soon be exhausted, and the HDD 16 will be filled with data (i.e., the data will be recorded on the entire recording space of the HDD 16).

Then, for example, the elapsed times of the cache files since they were recorded to the HDD 16 are referenced so that the entire data constituting the contents may be recorded to the optical disk 19 in chronological order of their cache files with a view to reducing the cache file data from the HDD 16. It is thus possible to hold within a predetermined range the total amount of the cache file data recorded on the HDD 16.

As shown in Fig. 4, a cache file that records not the entire data of a content but a certain data part of content is said to be in a stub file state. In particular, a cache file that records a plurality of certain data parts of content is said to be in a multi-stub state. As an exception, with all content data removed from the cache file, the extended attributes and the cache file ID may be recorded on the HDD 16 in what is called the zero-stub state.

When all data of a given content is read from the optical disk 19 and recorded to the HDD 16, the reading and recording of the data are carried out as an operation called reloading. Illustratively, the data of a content following retrieval from the optical disk 19 may be reloaded to the HDD 16 as the content in its entirety.

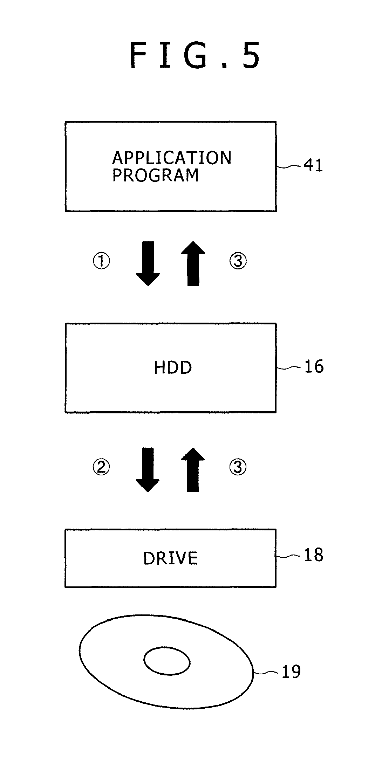

As shown in Fig. 5, the data corresponding to the input video signal and audio signal acquired from the application program 41 is recorded to the HDD 16. From the HDD 16, the recorded data is recorded to the optical disk 19 mounted on the drive 18. The recorded data may be read either from the HDD 16 or from the mounted optical disk 19 through the drive 18. The data read by the drive 18 from the optical disk 19 is recorded temporarily onto the HDD 16 before being forwarded from there to the application program 41.

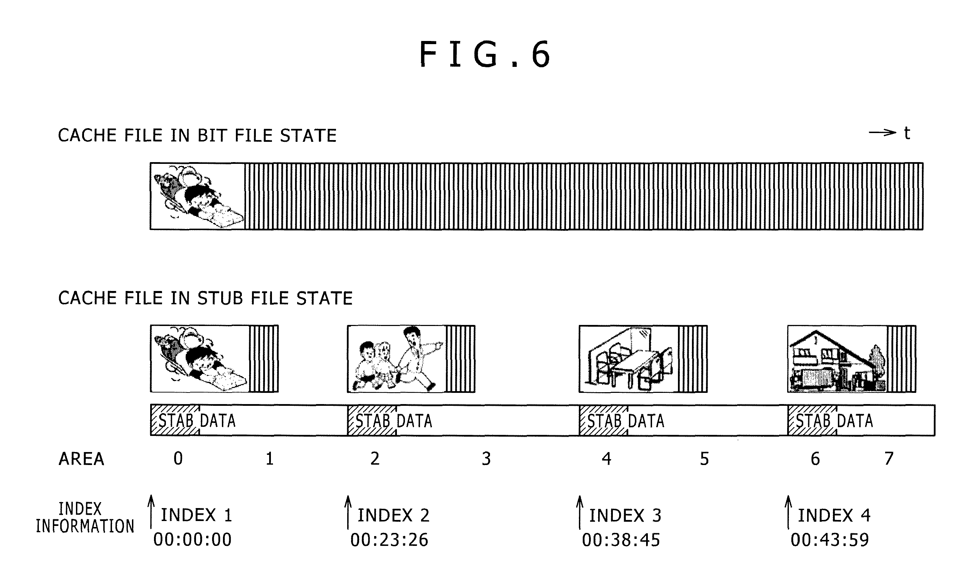

Fig. 6 is a schematic view explanatory of a cache file in the stub state. A cache file in the bit file state is also shown in Fig. 6 for comparison purposes. As illustrated in Fig. 6, the cache file in the bit file state holds the entire content data, while the cache file in the stub state retains data of content parts.

Illustratively, the cache file in the stub state holds the data constituting those content parts that are indexed by index information. It is assumed here that the index information points to four locations: index 1 pointing to the beginning of the content in question; index 2 pointing to the location at 23 minutes 26 seconds from the beginning of the content; index 3 pointing to the location at 38 minutes 45 seconds from the beginning of the content; and index 4 pointing to the location at 43 minutes 59 seconds from the beginning of the content. In this case, the content parts each spanning a predetermined time period following each of the four locations defined by the four indexes may be selected and stored as stub data into a cache file.

The length of time in which to reproduce a given content as stub data may be set illustratively for 20 to 30 seconds. This is a time period somewhat longer than the period from the time an appropriate optical disk 19 is retrieved from the disk slots 21 and mounted onto the drive 18 until the drive 18 starts reading content data from the mounted optical disk 19.

The stubs are content parts corresponding to the data held as cache files in the cache area of the HDD 16. Stub areas refer to those areas in the content of which the stub data is recorded on the HDD 16. Hole areas refer to those areas in the content of which no stub data is recorded on the HDD 16.

Where no distinction is made between the stub and the hole areas, they are simply called areas. In Fig. 6, a stub area 0 designated by index 1 has its data (i.e., stub data) recorded to the HDD 16 as a cache file. A hole area 1 between indexes 1 and 2 has none of its data recorded to the HDD 16. Likewise, stub areas 2, 4 and 6 designated by indexes 2, 3 and 4 respectively have their data (stub data) recorded to the HDD 16 as cache files. On the other hand, a hole area 3 between indexes 2 and 3, a hole area 5 between indexes 3 and 4, and a hole area 7 subsequent to index 6 have none of their data recorded to the HDD 16.

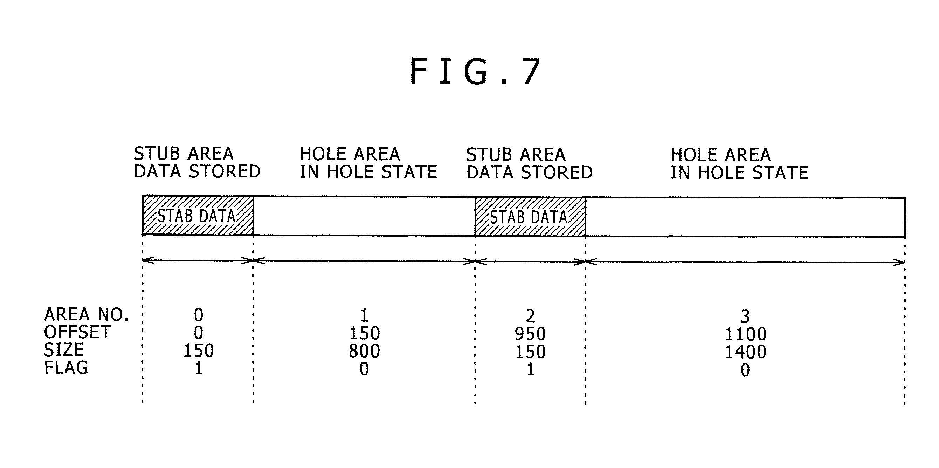

Described below with reference to Fig. 7 are areas and of area information as part of extended attributes. As illustrated in Fig. 7, a stub area is located at the beginning of the data of a content followed by a hole area which in turn is followed by another stub area followed by another hole area. In other words, the stub data constituting the starting data of the content is recorded (i.e., stored) in a cache file on the HDD 16; the data in an area of a predetermined length subsequent to the beginning of the content is not recorded as a cache file on the HDD 16 (i.e., left in the hole state). Following the hole-state area is the stub data of another part of the content recorded (i.e., stored) as a cache file on the HDD 16. Subsequent to this stub area is the data in an area of predetermined length not recorded as a cache file on the HDD 16 (i.e., left in the hole state). As can be seen, the stub areas recorded as the cache files on the HDD 16 and the hole areas with none of their data stored are alternated.

The area information includes area numbers, offsets, sizes, and flags of the areas involved. The area numbers are serial numbers of 0 through N starting from the beginning of a given file. That is, with "0" set as the initial area number, the areas are numbered serially with integer numbers starting from the beginning of the content data. The offset denotes an offset value indicating the distance illustratively in bytes between the beginning of the file (i.e., beginning of the content data) and the beginning of the area in question. The size represents illustratively in bytes the data size making up the area of interest in the file. The flag indicates whether the area in question is a stub area (i.e., data stored) or a hole area (in the hole state). For example, the flag "1" stands for a stub area (data stored) and the flag "0" for a hole area (in the hole state).

As illustrated, the stub area at the beginning of the content data is shown having 150 bytes of data. In this case, the stub area is given area number 0 (because the area heads the content data), has an offset of 0, possesses a size of 150, and is assigned the flag "1." The second area from the beginning of the content data is shown to have an intrinsic data size of 800 bytes and be a hole area (i.e., in the hole state). In this case, the area is given area number 1, has an offset of 150, possesses a size of 800, and is assigned the flag "0."

Similarly, the third area from the beginning of the content data is shown to have 150 bytes of data and be a stub area (i.e., data stored). This area is given area number 2, has an offset of 950 (150 + 800), possesses a size of 150, and is assigned the flag "1." The fourth area from the beginning of the content data is shown to have 1,400 bytes of data and be a hole area (in the hole state). This area is given area number 3, has an offset of 1,100 (950 + 150), possesses a size of 1,400, and is assigned the flag "0."

As described above, the area information as part of the extended attributes of contents indicates the status of each area in the cache file. Referencing the area information makes it possible to know what status each area in the cache file is in.

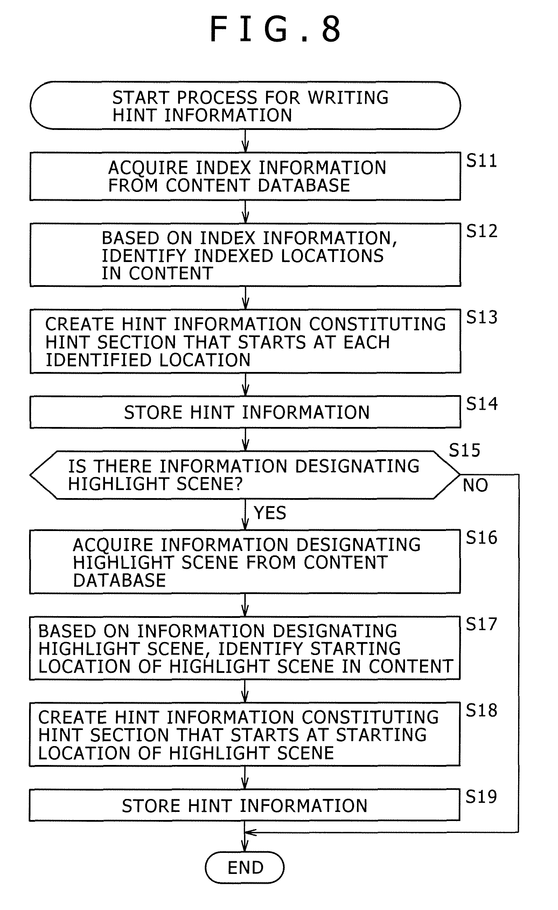

Described below with reference to the flowchart of Fig. 8 is the process for writing hint information. In step S11, the application program 41 acquires index information indicating where indexes are located in the content of interest from the content database 61 through the content manager 42. In step S12, the application program 41 identifies the indexed locations in the content on the basis of the index information.

In step S13, the application program 41 creates hint information constituting a hint section starting at each previously indexed location. A hint section is that part (i.e., range) of the content which is designated by the hint information in question.

The hint information provides hints about which parts of the content are recorded to the HDD 16 as cache files. Adding the hint information to the content (i.e., to its data) makes it possible to write desired parts of the content data to the cache area on the HDD 16 as stub data. That is, those portions of the content data which are indicated by the hint information are recorded to the HDD 16 as stub data in cache files. Referencing the hint information also permits step-by-step migration processing.

The hint information is made up of version numbers, hint section lengths, hint offsets, hint sizes, region flags, hint priorities, and timestamps. One item of hint information includes one version number and one hint section length. One item of hint information further includes as many hint offsets, hint sizes, region flags, hint priorities, and timestamps as the number of hint sections. That is, a single set of a hint offset, a hint size, a region flag, a hint priority, and a timestamp constitutes information about one area.

The version number denotes the version of the hint information in question and is used to maintain compatibility between the system and the software. The hint section length indicates the total amount of the data constituting all hint sections indicated by this hint information. If the size of the data of each hint section is assumed to be constant, the number of hint sections is obtained by dividing the hint section length by the data size per hint section.

The hint offset provides an offset of the starting location of a given hint section relative to the beginning of the content data. Illustratively the hint offset is expressed in units of data quantities (e.g., in bytes). The hint size, illustratively in bytes, designates the data size of the hint section in question.

The region flags provide attributes about each hint section, indicating whether a given hint section is indexed, whether the hint section in question corresponds to a highlight scene, or whether the hint section represents an important scene. The operating system or the like may reference the region flags to generate events depending on what takes place upon access.

The hint priority denotes the priority for a given hint section to migrate. The larger the value of the hint priority, the more likely the data part corresponding to the hint section of interest will migrate. If the hint priority is set to "0," the data part corresponding to the hint section in question remains cached on the HDD 16 acting as a primary storage until the content of interest is deleted from the recording and reproducing system 1. The value of the hint priority may be managed by the application program 41 or by the operating system. Illustratively, the value "0" may be set for the hint priority of a hint section corresponding to a frequently accessed content part (data).

The timestamp indicates the date and time at which the content part (data) corresponding to the hint section in question was last accessed. The application program 41 or the operating system sets the timestamps.

The application program 41 illustratively sets a predetermined value for the version number.

For example, the application program 41 acquires the data size ranging from the location corresponding to a given point in time determined in step S12 from which the content is to be reproduced, to the beginning of the content data. The data size thus acquired is used as the hint offset by the application program 41. The application program 41 also takes illustratively a predetermined value for the hint size. The application program 41 further takes predetermined values corresponding to the indexes and sets the values as the region flags.

Furthermore, the application program 41 sets a predetermined value as the hint priority. For example, the application program 41 sets the hint priority to "0" for the first index of a given content and to "1" for the other indexes of the content. The application program 41 sets as the timestamp the date and time at which the most recent access took place.

The application program 41 multiplies the number of hint sections by the hint size to obtain the hint section length.

The version numbers, hint section lengths, hint offsets, hint size, region flags, hint priorities, and timestamps created as described above are arrayed into a predetermined sequence by the application program 41 to generate the hint information.

In step S14, the application program 41 causes the storage manager 14 to store the hint information into the extended attributes of the content recorded in the migration file system 64 in the HSM 13.

In step S15, based on the result of the query put to the content manager 42, the application program 41 determines whether the content database 61 has information indicating a highlight scene. If in step S15 the information indicating a highlight scene is detected, step S16 is reached. In step S16, the application program 41 causes the content manager 42 to acquire the information indicative of the highlight scene from the content database 61.

In step S17, based on the information designating the highlight scene, the application program 41 identifies the starting location of the highlight scene in the content. Illustratively, the application program 41 identifies the beginning of the highlight scene defined by the applicable time of day for reproduction of the content on the basis of the information representative of that scene.

In step S18, the application program 41 creates the hint information constituting a hint section that starts at the starting location of the highlight scene. In step S19, the application program 41 causes the storage manager 14 to store the hint information into the extended attributes of the content recorded by the migration file system 64 in the HSM 13. This brings the process for writing hint information to an end.

If in step S15 the information indicative of any highlight scene is not detected, steps S16 through S19 are skipped. Then, the hint information writing process is terminated.

As described, the hint information is created and recorded on the basis of either the index information or the information designating the highlight scene. Adding the hint information to the content (i.e., content data) makes it possible to cache desired parts of the data as stub data on the HDD 16 so that the content data may be retrieved more quickly than ever.

Referencing the hint information thus recorded provides step-by-step migration processing.

The hint information may be set with values that directly reflect the user's operations. The hint information may be written not only by the application program 41 but also by some other appropriate program such the operating system.

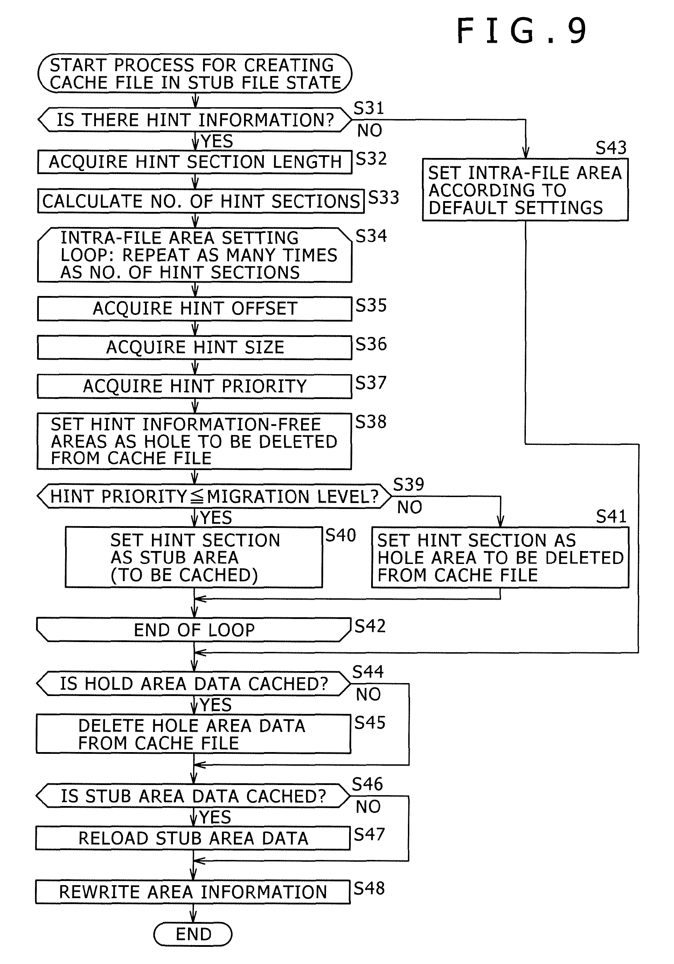

Fig. 9 is a flowchart of steps constituting the process for creating a cache file in the stub file state. In step S31, the storage manager 14 reads the extended attributes of a given content from the migration file system 64 in the HSM 13 and checks to determine whether there is hint information in the extended attributes. If the hint information is detected in step S31, the storage manager 14 goes to step S32, reads the extended attributes of the content from the migration file system 64 in the HSM 13, and extracts the hint information from the extended attributes thus retrieved. From the hint information, the storage manager 14 acquires the hint section length indicating the data size constituting all hint sections.

In step S33, the storage manager 14 calculates the number of hint sections by dividing the hint section length by the data size per hint section.

In steps S34 and S42, the storage manager 14 performs steps S35 through S41 with regard to each hint section. Steps S34 through S42 are repeated as many times as the number of the hint sections involved in a loop iteration.

In step S35, the storage manager 14 acquires from the hint information the hint offset indicating the starting location of a given hint section. In step S36, the storage manager 14 acquires from the hint information the hint size indicating the data size constituting the hint section in question. In step S37, the storage manager 14 obtains from the hint information the hint priority for the hint section of interest.

In step S38, the storage manager 14 sets the areas free of hint information as the hole areas to be deleted from the cache files recorded on the HDD 16.

In step S39, the storage manager 14 checks to determine whether the hint priority is lower than or equal to the migration level being established. If in step S39 the hint priority is found lower than or equal to the migration level, then the storage manager 14 goes to step S40. In step S40, the storage manager 14 sets the hint section to which the hint priority applies as a stub area (i.e., an area to be cached).

The migration level serves as a criterion by which to determine whether or not to cache a given hint section. Illustratively, the storage manager 14 determines the migration level either by keeping a predetermined migration level in storage or by referencing the date and time at which the content included in the file attribute was last accessed. Alternatively, the storage manager 14 may determine whether or not to cache a hint section based on the migration level supplied from the application program 41 responding to the user's operations.

If in step S39 the hint priority is found to be higher than the migration level in effect, then step S41 is reached. In step S41, the storage manager 14 sets the hint section to which the hint priority applies as a hole area to be deleted from the cache file.

Steps S35 through S41 are carried out on each of the hint sections involved. The area encompassing each hint section is either set as a stub area or as a hole area. Any area not furnished with hint information is set as a hole area.

Steps S34 through S42 are repeated as many times as the number of the hint sections concerned. Thereafter control is passed on to step S44.

If in step S31 no hint information is found in the extended attributes of the content, then the storage manager 14 goes to step S43. In step S43, the storage manager 14 sets the intra-file area according to the default settings. That is, the storage manager 14 in step S43 sets the content area either as a stub area or as a hole area. Step S43 is followed by step S44.

In step S44, the storage manager 14 checks to determine whether the data of any hole area is recorded in the cache file, i.e., whether hole data area is being cached. If the hole area data is found to be cached, the storage manager 14 goes to step S45 and causes the HSM 13 to delete the data in question from the cache file. Under control of the storage manager 14, the HSM 13 deletes the hole area data from the cache file on the HDD 16. Control is then passed on to step S46.

If in step S44 the hole area data is not found to be cached, that means there is no need to delete data from the cache file. In that case, step S45 is skipped and step S46 is reached.

In step S46, the storage manager 14 checks to determine whether the data of any stub area is recorded in a cache file, i.e., whether stub area data is being cached. If no stub area data is found to be cached, the storage manager 14 goes to step S47 and causes the HSM 13 to reload the data of the stub area in question into the cache file. Under control of the storage manager 14, the HSM 13 mounts onto the drive 18 the optical disk 19 that retains the entire content data. The HSM 13 causes the drive 18 to read content data from the optical disk 19 and places the retrieved content data into the cache file on the HDD 16, thus reloading the stub area data. Control is then passed on to step S48.

If in step S46 the stub area data is found to be cached, that means there is no need to reload stub area data. Step S47 is then skipped and step S48 is reached.

In step S48, the storage manager 14 causes the migration file system 64 in the HSM 13 to rewrite the area information as part of the extended attributes of the content in a manner reflecting the result of the deleting or reloading of data to or from the cache file. This brings the process of Fig. 9 to an end.

The cache file in the stub file state is created as described above. This is how the migration process is executed in a step by step manner on the basis of hint priorities.

When the hint priority of a desired value is added to each hint section, it is possible to create cache files in the stub file state in accordance with desired migration levels. This makes it possible to select simply and flexibly those parts of content data which have to be cached.

For example, an optimal storage area may be allocated for each content depending on its type so as to speed up the reading of its data. In the case of a video content or a music content, stub areas may be arranged according to the indexed locations of the content. This helps reduce the use of the primary storage space that can be costly per storage unit, such as the space on the HDD 16. Because the time it takes to access a stub area conceals the time necessary for reloading the entire content data into the primary storage, the user does not have to wait long for a desired content to start getting output following the issue of a command to access that content. It is thus possible to provide contents to users without provoking their frustration at having to wait interminably for the desired content to come up for output.

As discussed above with reference to Fig. 8, hint information may be created in a manner corresponding to index information (i.e., chapter information); hint information may also be created corresponding to a highlight scene. These types of hint information may be used as the basis for recording stub data to cache files. In such cases, the application program 41 may arrange to let the user designate indexed locations or a highlight scene more easily than the other parts of the content. That is, the application program 41 may guide the user into accessing the indexed locations or the highlight scene. Such arrangements allow the user to gain rapid access to the desired content without having to wait long for its output.

Not only video and music contents but also video game contents may be recorded in the manner described above. In such cases, particular data files or data parts of a given video game content may be recorded to the HDD 16.

What follows is a description of how content data is typically read out using cache files in the stub file state created as discussed above.

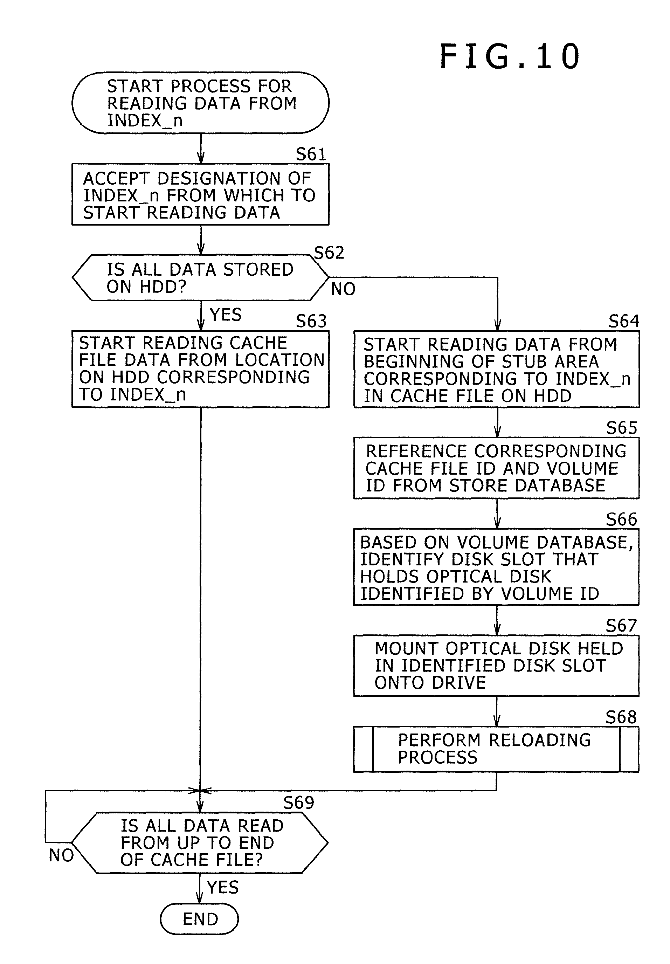

Fig. 10 is a flowchart of steps constituting the process for reading data from an index_n. In step S61, the file I/O manager 63 in the storage manager 14 accepts the designation of an index_n from which to start reading data. More specifically, the application program 41 accepts the selection of an index from which to start reproducing data in response to the user's operations. The application program 41 supplies the file I/O manager 63 with data designating the index which has been selected by the user and from which to start reproducing data. On acquiring the data from the application program 41, the file I/O manager 63 accepts the designation of the user-selected index_n from which the reproduction of data is to be started. The storage manager 14 orders the HSM 13 to start reproducing data from the index_n.

In step S62, the storage manager 14 checks to determine whether all data of the content designated to be read out is recorded as a cache file on the HDD 16, on the basis of the area information held in the migration file system 64 of the HSM 13. That is, a check is made to see if all data of the content designated for readout is stored on the HDD 16. If in step S62 all content data is found to be stored on the HDD 16, the storage manager 14 goes to step S63. In step S63, the storage manager 14 orders the HSM 13 to read content data starting from the location corresponding to the index_n. The HSM 13 orders the HDD 16 to start reading the cache file data from the location designated by the index_no Step S63 is followed by step S69.

If in step S62 not all data is found stored on the HDD 16, then step S64 is reached. In step S64, the storage manager 14 orders the HSM 13 to read content data starting from the location corresponding to the index_n. The HSM 13 causes the HDD 16 to start reading data from the beginning of the stub area corresponding to the index_n in the cache file on the HDD 16.

This is how the content of interest is reproduced immediately upon request.

The storage manager 14 issues to the HSM 13 a reload command, i.e., a request to read the data of the designated content from the optical disk 19 out onto the HDD 16.

In step S65, the HSM 13 references the applicable cache file ID and volume ID from the storage database 66. In step S66, based on the volume database 68, the storage server 65 identifies the disk slot 21 that holds the optical disk 19 identified by the volume ID. That is, the storage server 65 requests the media server 67 to identify the disk slot 21 retaining the optical disk 19 identified by the volume ID. The media server 67 causes the volume database 68 to search for the same volume ID matching the volume ID included in the request from the storage server 65, the search being made through the volume IDs identifying the optical disks 19 accommodated in the disk slots 21 of the jukebox 45. When the volume database 68 outputs information indicating the disk slot 21 holding the optical disk 19 identified by the volume ID as part of the request from the storage server 65, the media server 67 forwards that information to the storage server 65. This allows the storage server 65 to determine which disk slot 21 is holding the optical disk 19 applicable to the volume ID.

In step S67, the storage server 65 orders the media server 67 to mount onto the drive 18 the optical disk 19 kept in the identified disk slot 21. The media server 67 tells the juke system 20 through the changer driver 43 to mount the optical disk 19 onto the drive 18 out of the identified disk slot 21. More specifically, under control of the juke system 20, the picker 22 in the jukebox 45 removes the optical disk 19 from the disk slot 21 in question, transports the removed disk 19 and mounts it onto the drive 18.

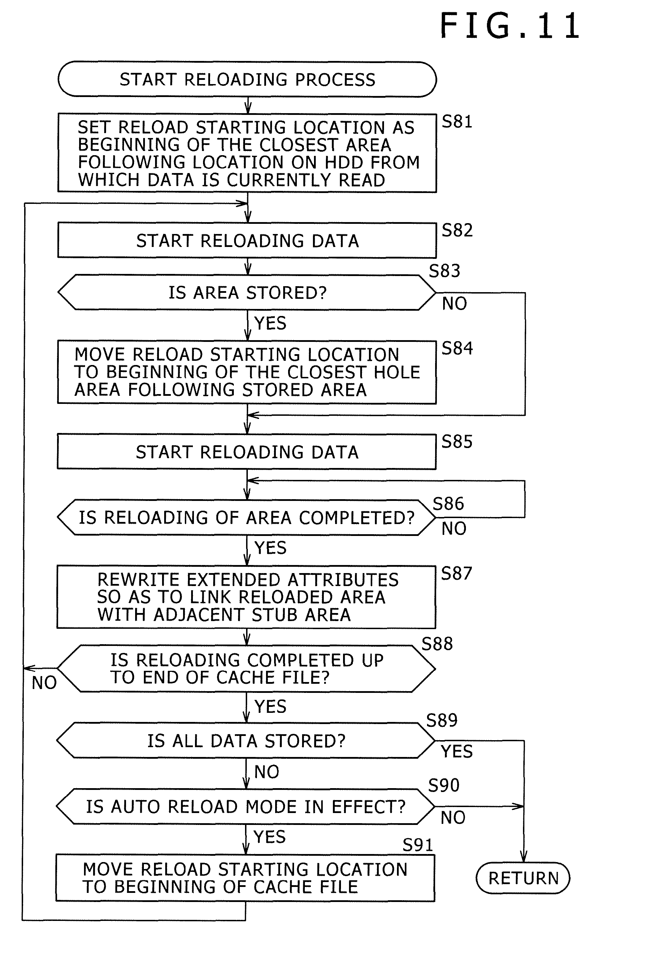

In step S68, a reloading process is performed. Details of the reloading process will be discussed later in reference to the flowchart of Fig. 11.

Step S68 is followed by step S69.

In step S69, the storage manager 14 checks to determine whether all data has been read from up to the end of the cache file. If the data is not found to have been read up to the end of the cache file, then step S69 is repeated.

When all data is found to have been read from up to the end of the cache file in step S69, the process of Fig. 10 is brought to an end.

Described below in detail with reference to the flowchart of Fig. 11 is the reloading process in step S68 of Fig. 10. In step S81, the storage manager 14 notifies the HSM 13 of a particular location and tells the HSM 13 to start the reloading process from that location. The migration file system 64 in the HSM 13 sets the reload starting location at the beginning of the closest area following that location on the HDD 16 from which data is currently read out.

In step S82, the storage server 65 in the HSM 13 starts reloading data. That is, the storage server 65 causes the drive 18 on which the optical disk 19 is being mounted to read data from the reload starting location and orders the HDD 16 to record the retrieved data to an appropriate area in the cache file.

In step S83, the migration file system 64 checks to determine whether the data of the area in question is being stored. If the data of the area is found being stored, then step S84 is reached. In step S84, the migration file system 64 moves the reload starting location to the beginning of the closest hole area following the area in question. If in step S83 the data of the area is not found to be stored, step S84 is skipped.

In step S85, the storage server 65 in the HSM 13 starts reloading data.

In step S86, the migration file system 64 checks to determine whether the reloading of the area in question is completed. If the reloading of the area is not found to be complete, step S86 is repeated.

If in step S86 the reloading of the area in question is found to be completed, step S87 is reached. In step S87, the migration file system 64 rewrites the extended attributes so as to link the reloaded area with the adjacent sub area.

In step S88, the migration file system 64 checks to determine whether the reloading of data is completed up to the end of the cache file. If in step S88 the reloading is found completed up to the end of the cache file, then step S89 is reached. In step S89, the migration file system 64 checks to determine if all content data has been recorded to the HDD 16, i.e., whether all content data has been stored on the HDD 16.

If in step S89 not all content data is found to have been stored, step S90 is reached. In step S90, the migration file system 64 checks to determine whether auto reload mode is in effect. If in step S90 auto reload mode is found to be in effect, step S91 is reached. In step S91, the migration file system 64 moves the reload starting location to the beginning of the cache file. Control is then returned to step S82 and the subsequent steps are repeated.

If in step S88 the reloading of data is not found complete up to the end of the cache file, then control is returned to step S82 and the subsequent steps are repeated.

If in step S89 all content data is found to have been stored or if in step S90 auto reload mode is not found to be in effect, then the reloading process of Fig. 11 is brought to an end.

As described above, while content data is being read from the cache file on the HDD 16 and before the reading of non-cached data is started, hole area data is retrieved from the optical disk 19 mounted on the drive 18 and the retrieved data is placed into the cache file. Because the drive 18 reads data from the optical disk 19 at a speed higher than the speed at which to read the data necessary for reproducing the content, the data yet to be placed in the cache file on the HDD 16 prior to the start of content reproduction can be stored into the cache file on the HDD 16 before the data in question starts being retrieved for reproduction of the content. In this manner, the data necessary for content reproduction is read always from the cache file on the HDD 16.

As a result, whenever the request is made to read the data of a content, it is possible to read the content data quickly with negligible waiting time. In the case of an audio or video content, images or sounds can be reproduced without interruptions.

Furthermore, since content data is prefetched from the optical disk 19 and recorded to the HDD 16, the drive 18 can be released earlier than if the data read from the optical disk 19 is directly used for content reproduction. That is, the drive 18 can be operated closer to capacity than before in reading data from the optical disk 19 at high speed. The utilization of the drive 18 is thus made more efficient than ever.

Alternatively, the data not recorded in the cache file may be read from the optical disk 19, and the content may be reproduced directly from the data thus retrieved from the optical disk 19.

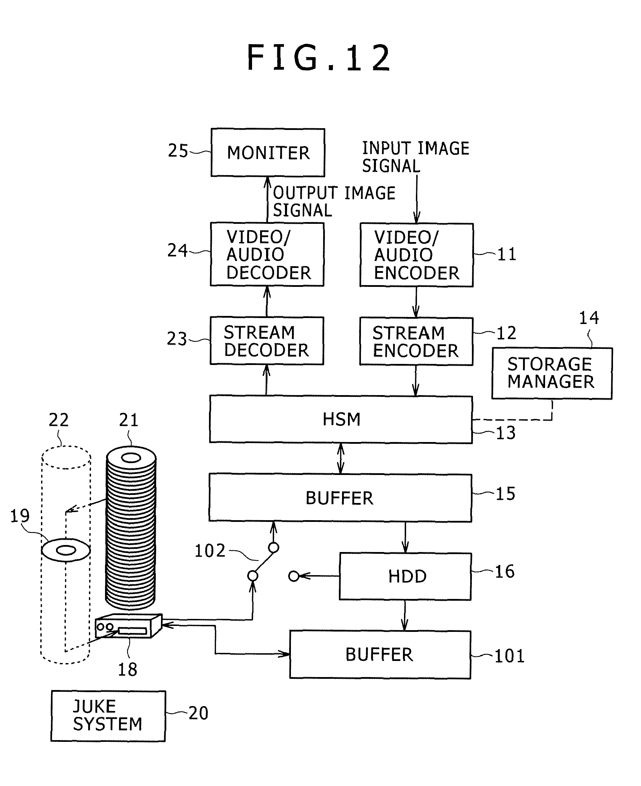

Fig. 12 is a block diagram showing another configuration of the recording and reproducing system embodying the present invention. Of the reference characters in Fig. 12, those already used in Fig. 1 designate like or corresponding component parts, and their descriptions are omitted where redundant.

The HDD 16 supplies recorded streams (data) to a buffer 101 or to a selector 102.

The buffer 101 is constituted by a semiconductor memory or by part of the storage space on the HDD 16. As such, the buffer 101 temporarily accommodates the stream (data) fed from the HDD 16 and forwards the buffered stream (data) to the drive 18.

Under control of the HSM 13, the selector 102 selects either the data output from the drive 18 or the data coming from the HDD 16. The buffer 15 acquires and retains the data either from the drive 18 or from the HDD 16.

The selector 102 may be formed by hardware. Alternatively, a facility functionally equivalent to the selector 102 may be implemented using software (i.e., process).

Under control of the storage manager 14, the selector 102 may select either the data from the drive 18 or the data from the HDD 16.

Where non-cached data is to be retrieved from the optical disk 19 in order to reproduce the content directly from the retrieved data from the optical disk 19, any data held in the cache file on the HDD 16 is read from the HDD 16 while the non-cached data is read from the optical disk 19 through the drive 18.

That is, the stub area data recorded in advance on the HDD 16 is read from there and placed into the buffer 15 for temporary storage. The hole area data not recorded beforehand on the HDD 16 is read from the optical disk 19 and sent directly to the buffer 15 for temporary storage without being recorded to the HDD 16.

The application program 41 reads the temporarily stored data from the buffer 15. On the basis of the buffered data thus retrieved, the application program 41 sends out an output video signal and an audio signal.

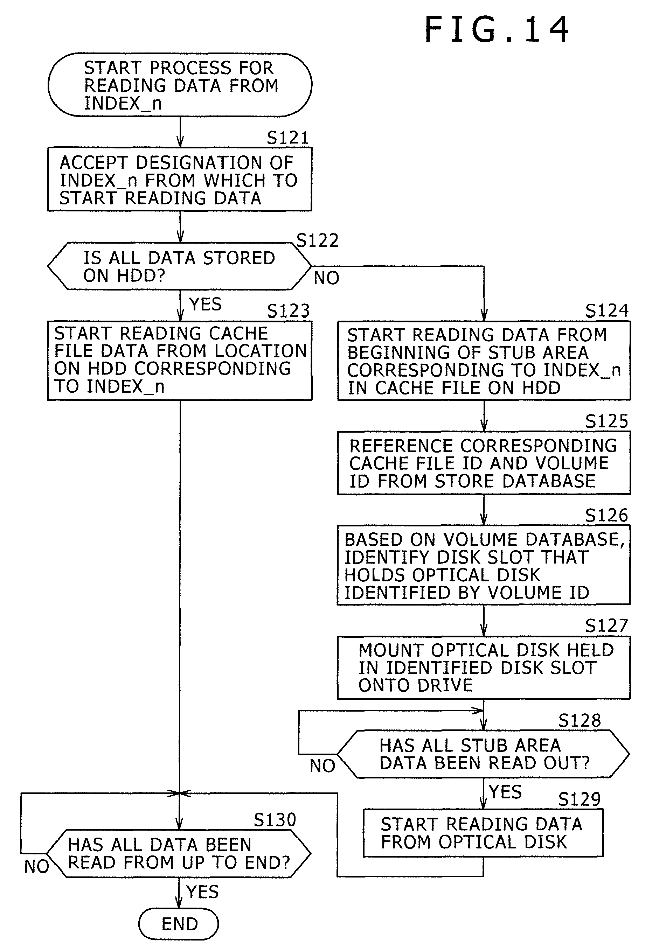

Fig. 14 is a flowchart of steps constituting the process for reading data from the index_n whereby non-cached data is read from the optical disk 19 so that the content may be reproduced directly from the data thus retrieved. Steps S121 through S123 are the same as steps S61 through S63 in Fig. 10 and thus will not be discussed further.

In step S124, the storage manager 14 orders the HSM 13 to read content data from the location corresponding to the index n. The HSM 13 causes the HDD 16 to start reading data from the beginning of the stub area corresponding to the index_n in the cache file on the HDD 16.

The storage manager 14 issues to the HSM 13 a command to request retrieval of content data from the optical disk 19.

In step S125, as in step S65, the HSM 13 references the applicable cache file ID and volume ID from the store database 66. In step S126, as in step S66, based on the volume database 68, the storage server 65 identifies the disk slot 21 that holds the optical disk 19 identified by the volume ID.

In step S127, as in step S67, the storage server 65 orders the media server 67 to mount onto the drive 18 the optical disk 19 kept in the identified disk slot 21. The media server 67 tells the juke system 20 through the changer driver 43 to mount the optical disk 19 onto the drive 18 out of the identified disk slot 21.

That is, while data is being read from the cache file on the HDD 19, the optical disk 19 is mounted onto the drive 18 in the background.

In step S128, the HSM 13 checks to determine whether the stub area data kept on the HDD 16 has all been read out. If not all stub area data is found to have been read out yet, step S128 is repeated. When all stub area data is found to have been read out in step S128, step S129 is reached. In step S129, the HSM 13 causes the drive 18 to start reading data from the mounted optical disk 19. More specifically, the migration file system 64 in the HSM 13 sets the location from which to start reading data on the optical disk 19 as the beginning of the closest hole area following the location from which data is currently read on the HDD 16. The storage server 65 orders the drive 18 mounted with the optical disk 19 to read data from the read starting location on the disk. The data read by the drive 18 is supplied to the stream decoder 23.

Step S129 is followed by step S130.

In step S130, the storage manager 14 checks to determine whether the data has been read from up to the end of the content. If the data is not found to have been read from up to the end, step S130 is repeated.

When the data is found to have been read from up to the end of the content in step S130, the process of Fig. 14 is brought to an end.

In the manner described above, the frequency of access to the HDD 16 can be reduced. It is also possible to minimize the amount of the recording space used up on the HDD 16.

Once the optical disk 19 is mounted on the drive 18, data can be read out at high speed from any portions of the content including its hold areas.

If desired, the process of the recording and reproducing system 1 performed as shown in Fig. 1 and the process of the recording reproducing system 1 carried out as indicated in Fig. 12 may be alternated adaptively.

What follows is a description of how contents are recorded and encoded by the recording and reproducing system 1.

Modes in which to define the format for encoding contents upon recording as well as the bit rate for recording contents are determined for the recording and reproducing system 1.

Specifically, the recording and reproducing system 1 is provided with four modes: DVD priority mode, image quality priority mode, personal content priority mode, and recording capacity priority mode. These are the modes in which to determine the record encoding format or the bit rate.

In DVD priority mode, content data is encoded at a suitable bit rate in MPEG-2 format in such a manner that an entire content will be recorded to a single optical disk 19 such as a DVD+R or DVD+RW.

In image quality priority mode, content data is encoded in MPEG-2 format at the highest bit rate defined in the MPEG-2 standard. This mode gives priority to the image quality of the content without regard to the capacity of the recording medium such as the HDD 16 or optical disk 19. Alternatively, image quality priority mode is used to encode content data in AVC format at the highest bit rate defined in the AVC standard.

It should be noted that in image quality priority mode, a single content may be recorded to two or more optical disks 19.

In personal content priority mode, the content recorded personally by the user in DV format is recorded unmodified in DV format. Alternatively in personal content priority mode, the content encoded personally by the user in MPEG-2 format for recording may be recorded unmodified in the same format. That is, personal content priority mode is a mode in which to suppress degradation in the definition of contents without changing their encoding format and bit rate as much as possible.

In recording capacity priority mode, content data is encoded in MPEG-2 format at the lowest bit rate defined in the MPEG-2 standard so that priority will be given to the capacity of the recording medium such as the HDD 16 or optical disk 19. Alternatively, recording capacity priority mode is used to encode the content in AVC format at a bit rate lower than the lowest bit rate defined in the MPEG-2 standard.

Regardless of the foregoing description, the bit rate in recording capacity priority mode may be of any value as long as it is lower than the bit rate defined in image quality priority mode. The bit rate for recording capacity priority mode and the bit rate for image quality priority mode are determined in advance. Alternatively, the user may personally determine the bit rate for recording capacity priority mode as well as the bit rate for image quality priority mode.

In the recording and reproducing system 1, one of the multiple modes above is linked to the system 1 as a whole, to the terminal through which contents are input, or to the input encoding format in which the input content is encoded, on the basis of the command from the user. The recording and reproducing system 1 determines the mode for the content based on the mode linked to the system 1 as a whole, to the terminal through which contents are input, or to the input encoding format. Alternatively, the recording and reproducing system 1 may determine the mode for the content in accordance with the user's command.

The recording and reproducing system 1 controls encoding of the input content using the recording encoding format or the bit rate defined in the mode determined as described above.

What follows is a description of typical structures of the video/audio encoder 11, video/audio decoder 24, and application program 41 whereby contents are recorded and encoded.

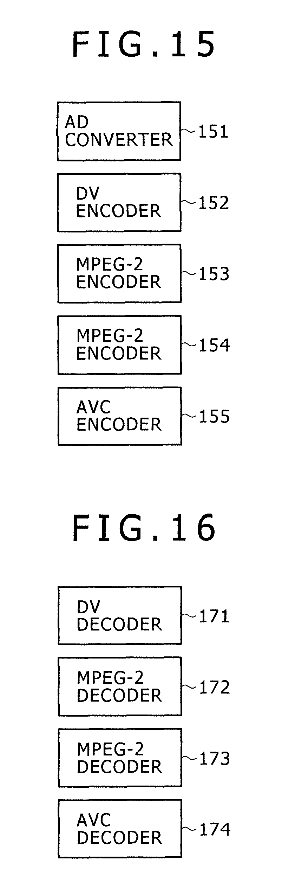

Fig. 15 is a block diagram showing a typical structure of the video/audio encoder 11. The video/audio encoder 11 includes an AD converter (analog-to-digital converter) 151, a DV encoder 152, an MPEG-2 encoder 153, an MPEG-2 encoder 154, and an AVC encoder 155.

The AV converter 151 converts an input video signal in analog format to baseband video data. The AV converter 151 also converts an input audio signal in analog format to baseband audio data. The baseband video data derived from conversion is sent from the AD converter 151 to the DV encoder 152.

The DV encoder 152 encodes in DV format the baseband video data supplied from the AD converter 151.

The MPEG-2 encoder 153 encodes contents in MPEG-2 format at the bit rate defined in image quality priority mode. Illustratively, the MPEG-2 encoder 153 encodes contents in MPEG-2 format at the highest bit rate defined in the MPEG-2 standard.

The MPEG-2 encoder 154 encodes contents in MPEG-2 format at the bit rate defined in recording capacity priority mode. Illustratively, the MPEG-2 encoder 154 encodes contents in MPEG-2 format at the lowest bit rate defined in the MPEG-2 standard.

The AVC encoder 155 encodes contents in AVC format.

Fig. 16 is a block diagram showing a typical structure of the video/audio decoder 24. The video/audio decoder 24 includes a DV decoder 171, an MPEG-2 decoder 172, an MPEG-2 decoder 173, and an AVC decoder 174.

The DV decoder 171 decodes the content encoded in DV format into baseband video data. The baseband video data derived from decoding is output by the DV decoder 171.

The MPEG-2 decoder 172 decodes the content that was encoded by the MPEG-2 encoder 153 into baseband video data, and outputs the baseband video data thus acquired. Illustratively, the MPEG-2 decoder 172 decodes the content that was encoded in MPEG-2 format at the highest bit rate defined in the MPEG-2 standard. The baseband video data derived from decoding is output by the MPEG-2 decoder 172.

The MPEG-2 decoder 173 decodes the content that was encoded by the MPEG-2 encoder 154 and outputs the baseband video data derived from decoding. Illustratively, the MPEG-2 decoder 173 decodes the content that was encoded in MPEG-2 format at the lowest bit rate defined in the MPEG-2 standard and outputs the baseband video data derived from decoding.

The AVC decoder 174 decodes the content encoded in AVC format. The baseband video data derived from decoding is output by the AVC decoder 174.

Fig. 17 is a block diagram showing a typical structure of the application program 41. The application program 41 is constituted by a mode linking section 191, a content mode determination section 192, a content mode recording section 193, a recording control section 194, an encoding control section 195, a recompression section 196, and a signal processing section 197.

The mode linking section 191 links one of DVD priority mode, image quality priority mode, personal content priority mode, and recording capacity priority mode to the recording and reproducing system 1 as a whole, to the input terminal through which to input a content, or to the input encoding format in which to encode the input content, on the basis of the command from the user.

The content mode determination section 192 determines one of DVD priority mode, image quality priority mode, personal content priority mode, and recording capacity priority mode as the mode for an input content on the basis of the mode linked to the input terminal through which to input the content or to the input encoding format in which to encode the input content, and in accordance with either the input terminal for input of the content or the input encoding format. Alternatively, based on the command from the user, the content mode determination section 192 determines one of DVD priority mode, image quality priority mode, personal content priority mode, and recording capacity priority mode as the mode for the content of interest.

The content mode determination section 192 includes a content format determination section 201, an input terminal determination section 202, and a command acquisition section 203. The content format determination section 201 determines the format in which to encode the content to be input. For example, the content format determination section 201 determines the format for encoding the input content based on the metadata of that content.

The input terminal determination section 202 determines the terminal through which to input a content illustratively on the basis of input selector status in the recording and reproducing system 1. The input terminal refers illustratively to a pin jack through which analog signals are input, a terminal according to the IEEE (Institute of Electrical and Electronic Engineers) 1394 standard (i.e., DV terminal), or a network interface. For the recording and reproducing system 1, the input terminal is any one of input routes identified individually by such names as Analog Input 1, Analog Input 2, Component Input 1, and Digital Input 1.

The command acquisition section 203 acquires the command from the user for designating the mode for the content of interest. The command is obtained in the form of a signal entered through a switch or from the light-receiving part of a remote controller, not shown.

The content mode recording section 193 records information indicative of the mode determined for the content in question. Illustratively, the content mode recording section 193 records to the content database 61 information representative of the mode which is determined out of DVD priority mode, image quality priority mode, personal content priority mode, and recording capacity priority mode and which corresponds to the content of interest.

The recording control section 194 controls recording of the input content to the HDD 16 via the HSM 13.

The encoding control section 195 controls encoding of the input content in such a manner that the content in question is encoded using the record encoding format or the bit rate defined in the mode determined for the content out of DVD priority mode, image quality priority mode, personal content priority mode, and recording capacity priority mode. The encoding control section 195 includes a content mode discrimination section 204.

The content mode discrimination section 204 discriminates whether the mode determined for the content of interest is DVD priority mode, image quality priority mode, personal content priority mode, or recording capacity priority mode. Illustratively, the content mode discrimination section 204 discriminates the mode determined for the content on the basis of the mode recorded in the content database 61.

The recompression section 196 controls recompression (i.e., reencoding) of contents in accordance with the command from the user.

The signal processing section 197 performs various signal processes on contents. For example, where the mode currently in effect defines the number of pixels for recording a given content, the signal processing section 197 subjects the content in question to a signal process such that the number of pixels defined in the currently selected mode will be attained. Where recording capacity priority mode defines the number of pixels for recording the content as 640 × 480 (i.e., standard definition (SD)), the signal processing section 197 submits the content to a signal process such that the content in HD (high definition) format will be brought down to the standard definition (640 × 480 pixels).

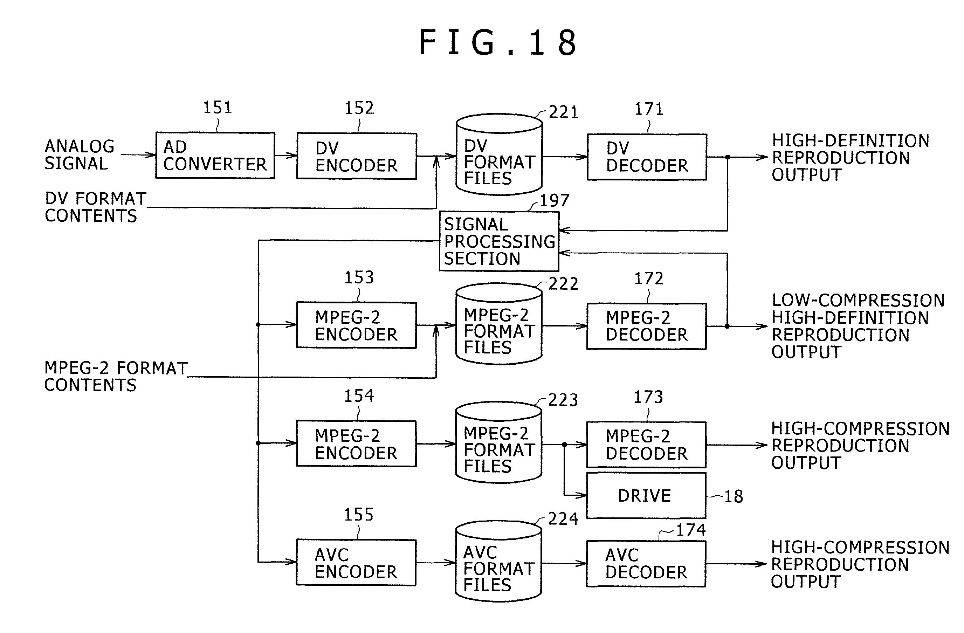

Fig. 18 is a schematic view explanatory of how contents are encoded. When an analog-signal content is input, the content is converted to digital data by the AD converter 151 before being encoded in DV format by the DV encoder 152. The content encoded in DV format is stored into a DV-format file 221 which in turn is recorded to the HDD 16 by way of the HSM 13.

When a given content encoded in DV format is input, that content is placed unmodified into the DV-format file 221. That is, the content is stored into the DV-format file 221 which in turn is recorded to the HDD 16 via the HSM 13.

If a content in MPEG-2 format is input, that content is placed unmodified into an MPEG-2 format file 222. In other words, the content is stored into the MPEG-2 format file 222 which in turn is recorded to the HDD 16 through the HSM 13.

When a given content encoded in DV format is to be reproduced, the content of interest stored in the DV-format file 221 is retrieved from the HDD 16 via the HSM 13. The retrieved content in DV format is decoded by the DV decoder 171 and reproduced. In this case, degradation stemming from encoding is minimal so that the reproduced content has a higher image quality than the content in any other format when output.

If personal content priority mode has been determined as the mode for the content, the content encoded in DV format will not be converted to any other format.

If image quality priority mode has been determined as the mode for the content, the content encoded in DV format is converted either to MPEG-2 format at the highest bit rate defined in the MPEG-2 standard or to AVC format at the highest bit rate defined in the AVC standard. In such a case, the content held in the DV-format file 221 is retrieved from the HDD 16 by way of the HSM 13. The retrieved content in DV format is decoded by the DV decoder 171 into baseband video data. The resulting baseband video data is forwarded to the MPEG-2 encoder 153 or to the AVC encoder 155.

Where image quality priority mode has been determined as the mode for the content, the MPEG-2 encoder 153 encodes the content in MPEG-2 format at the highest bit rate defined in the MPEG-2 standard. The content encoded in MPEG-2 format at the highest bit rate defined in the MPEG-2 standard is stored into the MPEG-2 format file 222. The content in the MPEG-2 format file 222 is then recorded to the HDD 16 via the HSM 13.

Where the content encoded in MPEG-2 format at the highest bit rate defined in the MPEG-2 standard is to be reproduced, the content of interest in the MPEG-2 format file 222 is retrieved from the HDD 16 through the HSM 13. The content, encoded in MPEG-2 format and placed in the MPEG-2 format file 222, is decoded by the MPEG-2 decoder 172 and reproduced. In this case, the content is reproduced with less degradation in image quality stemming from encoding than contents encoded in MPEG-2 format at lower bit rates, so that the resulting image is output at high quality.

Where image quality priority mode has been determined as the mode for the content, the AVC encoder 155 encodes the content in AVC format at the highest bit rate defined in the AVC standard.

The content encoded by the AVC encoder 155 in AVC format at the highest bit rate defined in the AVC standard is stored into an AVC-format file 224.

Where the content held in the AVC-format file 224 is to be reproduced, the content of interest is retrieved together with the file 224 from the HDD 16 through the HSM 13. The content, encoded in AVC format and placed in the AVC-format file 224, is decoded by the AVC decoder 174 and reproduced. In this case, the content is reproduced with less degradation in image quality stemming from encoding than contents encoded in MPEG-2 format at the same bit rate, so that the resulting image is output at high quality.

Where image quality priority mode has been determined as the mode for the content, the content encoded in MPEG-2 format is either left unmodified in the same format or converted to AVC format at the highest bit rate defined in the AVC standard. The process for converting the content in MPEG-2 format to AVC format at the highest bit rate defined in the AVC standard is the same as the above-described process for converting contents to DV format and thus will not be discussed further.

If DVD priority mode has been determined as the mode for the content, the content encoded in DV format is converted to MPEG-2 format at a suitable bit rate such that the entire content will be recorded to a single optical disk 19 such as DVD+R or DVD+RW. In this case, the content in the DV-format file 221 is retrieved from the HDD 16 through the HSM 13, and the retrieved content in DV format is decoded by the DV decoder 171 into baseband image data. The resulting baseband image data is supplied to the MPEG-2 encoder 154.

The MPEG-2 encoder 154 encodes the content in MPEG-2 format at a suitable bit rate such that the content as a whole will be recorded to one optical disk 19 (DVD+R or DVD+RW). For example, where an entire content is to be recorded to a single optical disk 19 (DVD+R or DVD+RW) with a recording capacity of 4.7 GB, the MPEG-2 encoder 154 encodes the content in question in MPEG-2 format at a bit rate such that the data size of the encoded content will be as close to 4.7 GB as possible but less than 4.7 GB.

Illustratively, when the content of interest is to be recorded to the optical disk 19 (DVD+R or DVD+RW) with a recording capacity of 8.5 GB, the MPEG-2 encoder 154 encodes the content in MPEG-2 format at a bit rate such that the data size of the encoded content will be as close to 8.5 GB as possible but less than 8.5 GB.

The content encoded by the MPEG-2 encoder 154 in MPEG-2 format at a suitable bit rate is placed into an MPEG-2 format file 223. That is, the content is stored into the MPEG-2 format file 223 before being recorded to the HDD 16 via the HSM 13.

When the content held in the MPEG-2 format file 223 is to be reproduced, that content is retrieved together with the file 223 from the HDD 16 through the HSM 13. The content, stored in the MPEG-2 format file 223 and encoded in MPEG-2 format, is decoded by the MPEG-2 decoder 173 and reproduced.

The drive 18 writes to the optical disk 19 (DVD+R or DVD+RW) the content held in the MPEG-2 format file 223 and set for DVD priority mode. In this case, the content as a whole is written to a single optical disk 19 with no change in the encoding format or in the bit rate because the data size of the content stored in the MPEG-2 format file 223 is smaller than the recording capacity of the optical disk 19.

For example, suppose that with an optical disk 19 (DVD+R or DVD+RW) mounted in an appropriate disk slot 21, the user gives the application program 41 a command to write a given content set for DVD priority mode to the disk 19 in the slot 21. In that case, the drive 18 writes the content set for DVD priority mode to the optical disk 19 such as a DVD+R or DVD+RW.

If DVD priority mode has been determined as the mode for the content, the content encoded in MPEG-2 format is converted to a bit rate such that the entire content will be recorded to a single optical disk 19 (DVD+R or DVD+RW). The process for converting the content in MPEG-2 format to the appropriate bit rate is the same as the above-described process for converting contents to DV format and thus will not be discussed further.

If recording capacity priority mode has been determined as the mode for the content, the content encoded in DV format is converted either to MPEG-2 format at the lowest bit rate defined in the MPEG-2 standard or to AVC format at a bit rate lower than the lowest bit rate defined in the MPEG-2 standard.

In the case above, the content stored in the DV-format file 221 is retrieved from the HDD 16 through the HSM 13, and the retrieved content in DV format is decoded by the DV decoder 171 into baseband video data. The resulting baseband video data constituting the content is forwarded to the MPEG-2 encoder 154 or to the AVC encoder 155.

If recording capacity priority mode has been determined as the mode for the content, the MPEG-2 encoder 154 encodes the content in MPEG-2 format at the lowest bit rate defined in the MPEG-2 standard.

The content encoded by the MPEG-2 encoder 154 in MPEG-2 format at the lowest bit rate defined in the MPEG-2 standard is stored into the MPEG-2 format file 223. In this case, the data size of the encoded content is made smaller than if the content were encoded in MPEG-2 format at a higher bit rate. As a result, more contents may be recorded to the HDD 16 than ever given that its recording capacity remains the same.

Where recording capacity priority mode has been determined as the mode for the content, the AVC encoder 155 encodes the content in AVC format at a bit rate lower than the lowest bit rate defined in the MPEG-2 standard.

The content encoded by the AVC encoder 155 in AVC format at a bit rate lower than the lowest bit rate defined in the MPEG-2 standard is placed into the AVC-format file 224. In this case, the data size of the encoded content is made smaller than if the content were encoded in MPEG-2 format. As a result, more contents may be recorded to the HDD 16 than ever given that its recording capacity remains the same.

Where recording capacity priority mode has been determined as the mode for the content, the content encoded in MPEG-2 format is converted either to MPEG-2 format at the lowest bit rate defined in the MPEG-2 standard or to AVC format at a bit rate lower than the lowest bit rate defined in the MPEG-2 standard. The process for converting the content in MPEG-2 format either to MPEG-2 format at the lowest bit rate defined in the MPEG-2 standard or to AVC format at a bit rate lower than the lowest bit rate defined in the MPEG-2 format is the same as the above-described process for converting contents to DV format and thus will not be discussed further.

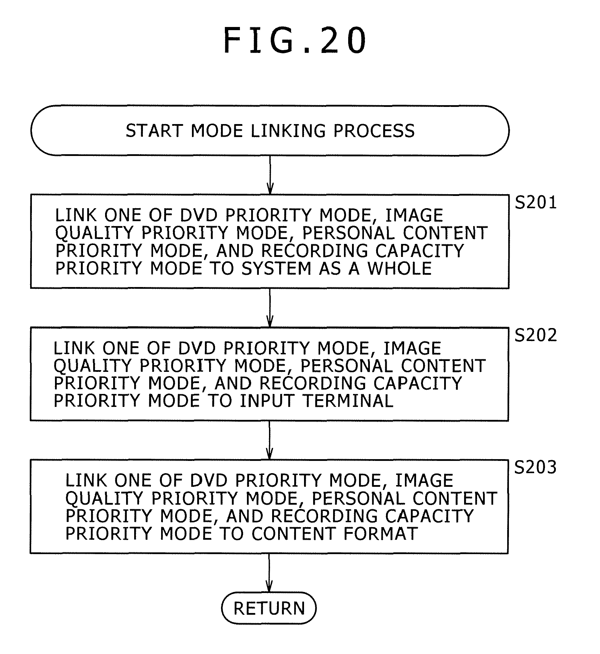

Fig. 19 is a flowchart of steps constituting a recording process of the application program 41. In step S161, the mode linking section 191 carries out a mode linking process. Details of the mode linking process will be discussed later with reference to the flowchart of Fig. 20.

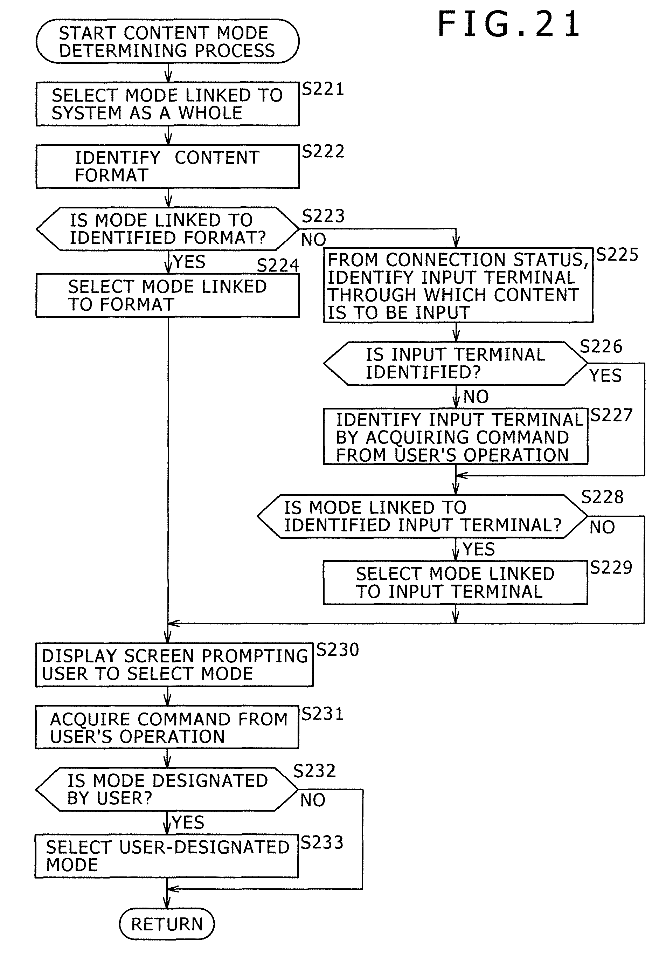

In step S162, the content mode determination section 192 performs a content mode determining process. Details of the content mode determining process will be described later with reference to the flowchart of Fig. 21.

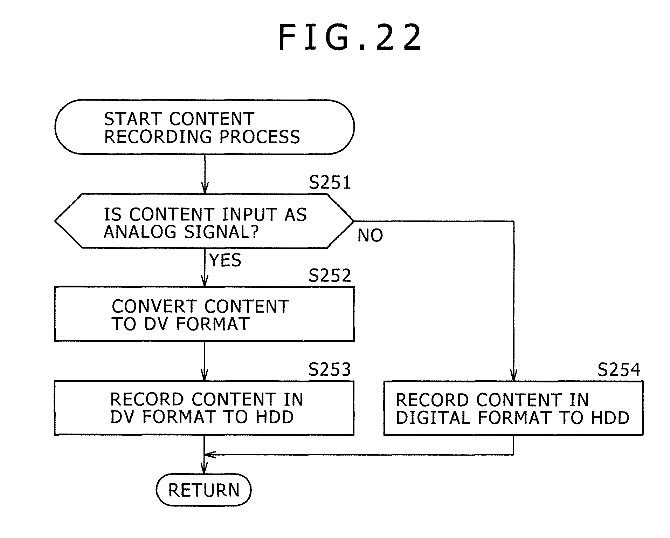

In step S163, the recording control section 194 executes a content recording process. Details of the content recording process will be explained later in reference to the flowchart of Fig. 22.

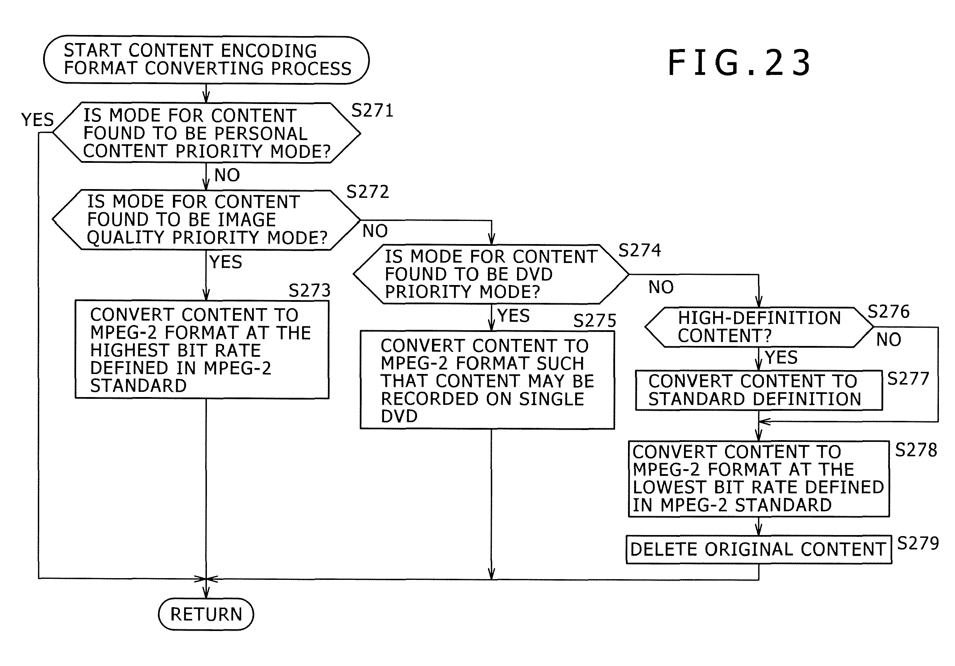

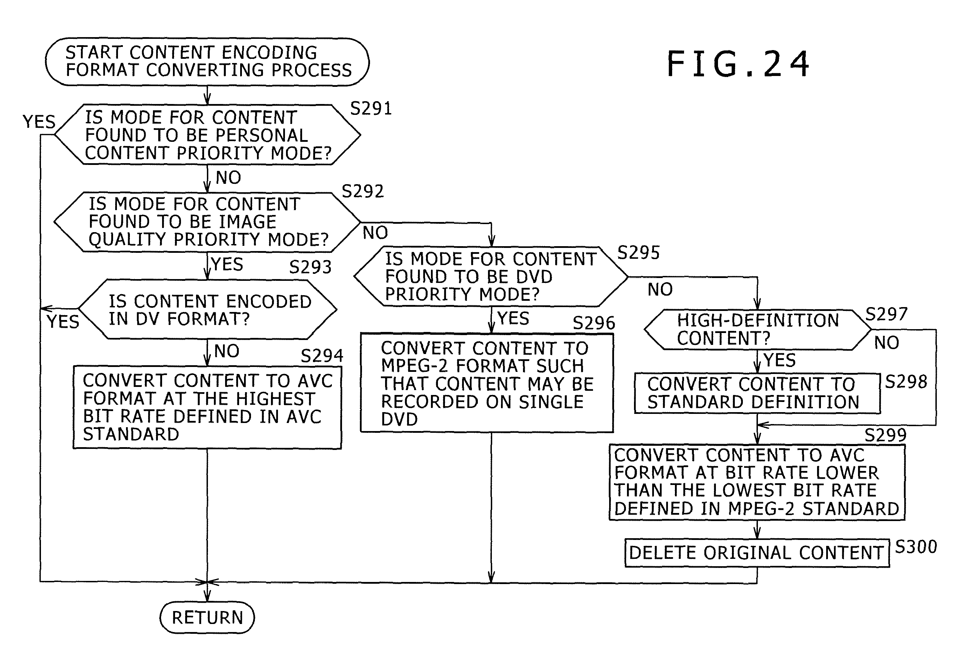

In step S164, the encoding control section 195 carries out a content encoding format converting process. Details of this process will be discussed later with reference to the flowchart of Fig. 23 or Fig. 24.

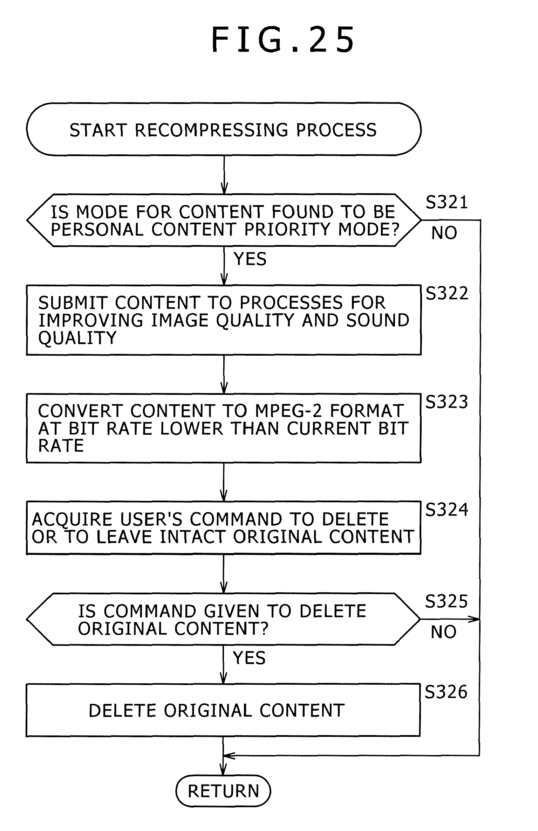

In step S165, the application program 41 checks the signal representing the command reflecting the user's operation, to determine whether or not to recompress the content of interest. If the content is found set for recompression, step S166 is reached. In step S166, the recompression section 196 carries out a recompressing process. This brings the recording process of Fig. 19 to an end. Details of the recompressing process will be described later with reference to the flowchart of Fig. 25.

If in step S165 the content is not found set for recompression, then step S160 is skipped. The recording process will then be terminated without recompression of the content in question.

Fig. 20 is a flowchart of detailed steps constituting the mode linking process corresponding to step S161. In step S201, the mode linking section 191 links one of DVD priority mode, image quality priority mode, personal content priority mode, and recording capacity priority mode to the recording and reproducing system 1 as a whole, on the basis of the signal which reflects the user's command-issuing operation and which comes illustratively from a switch or from the light-receiving part of a remote controller, not shown.

In step S202, the mode linking section 191 links one of DVD priority mode, image quality priority mode, personal content priority mode, and recording capacity priority mode to the input terminal in effect, also on the basis of the signal reflecting the user's command-issuing operation and coming illustratively from a switch or from the light-receiving part of a remote controller, not shown.

That is, the mode linking section 191 links the mode to an individually identified input terminal or terminals such as Analog Input 1, Analog Input 2, Component Input 1, or Digital Input 1.

In step S202, the input terminal to which the mode is linked may be either part or all of the input terminals furnished on the recording and reproducing system 1.

If any mode is linked to a plurality of input terminals, each input terminal is associated with the mode in question. In this case, a different mode may be linked to a different input terminal, or the same mode may be linked to different input terminals.

In step S203, the mode linking section 191 links one of DVD priority mode, image quality priority mode, personal content priority mode, and recording capacity priority mode to the content format in effect, also on the basis of the signal reflecting the user's command-issuing operation and coming illustratively from a switch or from the light-receiving part of a remote controller, not shown. This brings the mode linking process of Fig. 20 to an end. Illustratively in step S203, the mode linking section 191 selects personal content priority mode out of DVD priority mode, image quality priority mode, personal content priority mode, and recording capacity priority mode and links what is selected to the DV format.

If in step S203 any mode is linked to a plurality of content formats, each content format is associated with the mode in question. In this case, a different mode may be linked to a different content format, or the same mode may be linked to different content formats.

In the manner described above, any one mode out of those for determining either the format in which to encode contents upon recording or the bit rate at which to record contents may be linked to the input terminal through which to input a given content or to the input encoding format in which the input content is encoded, on the basis of the command issued by the user.

Fig. 21 is a flowchart of detailed steps constituting the content mode determining process corresponding to step S162. In step S221, the content mode determination section 192 establishes the mode linked to the recording and reproducing system 1 as a whole as the mode for the content. For example, if DVD priority mode is linked to the recording and reproducing system 1, the content mode determination section 192 determines DVD priority mode as the mode for the content in step S221.

In step S222, the content format determination section 201 in the content mode determination section 192 identifies the format of the content to be input. Illustratively in step S222, the content format determination section 201 reads metadata of the content to be input from a video camera 71 connected via a DV terminal, and identifies the format in which the input content is encoded on the basis of the metadata.

In step S223, the content mode determination section 192 checks to determine whether any mode is linked to the format identified for the content. If in step S223 a particular mode is found linked to the identified content format, step S224 is reached. In step S224, the content mode determination section 192 determines the mode linked to the identified format as the mode for the content. Step S224 is followed by step S230. If the DV format is identified as the content format in step S222 and if personal content priority mode is linked to the DV format, then the content mode determination section 192 in step S224 determines personal content priority mode as the mode for the content.

If in step S223 no mode is found linked to the determined content format, then step S225 is reached. In step S225, the input terminal determination section 202 identifies the terminal through which to input the content on the basis of connection status. Illustratively in step S225, the input terminal determination section 202 determines an individually identified input terminal such as Analog Input 1, Analog Input 2, Component Input 1, or Digital Input 1 as the terminal through the content is input.

In step S226, the content mode determination section 192 checks to determine whether any input terminal has been identified. If no input terminal is found to have been identified, step S227 is reached. In step S227, the command acquisition section 203 in the content mode determination section 192 identifies the input terminal through which to input the content by acquiring the command reflecting the user's operation. Step S227 is followed by step S228. Illustratively, the command acquisition section 203 identifies the terminal through which the content is input by acquiring the user's instruction, i.e., a command reflecting the user's operation in the form of a signal coming from a switch or from the light-receiving part of a remote controller, not shown.

If in step S226 a particular input terminal is found to be identified, that means there is no need to acquire a command from the user. Step S227 is then skipped and control is passed on to step S228.

In step S228, the content mode determination section 192 checks to determine whether any mode is linked to the terminal identified for the content to be input. If in step S228 any mode is found linked to the identified input terminal, step S229 is reached. In step S229, the content mode determination section 192 determines the mode linked to the identified input terminal as the mode for the content. Step S229 is followed by step S230.

For example, suppose that the input terminal identified in step S225 or S227 is Analog Input 1 and that recording capacity priority mode is linked to Analog Input 1. In such a case, the content mode determination section 192 in step S229 determines recording capacity priority mode as the mode for the content.

If in step S228 no mode is found linked to the identified input terminal, then a mode is left undetermined. In this case, step S230 is reached.

In step S230, the command acquisition section 203 causes a display device, not shown, to display a screen for prompting the user to determine the mode. In step S231, the command acquisition section 203 acquires the command reflecting the user's operation. Illustratively, the command acquisition section 203 acquires the command reflecting the user's operation in the form of a signal coming from a switch or from the light-receiving part of a remote controller, not shown.

In step S232, the content mode determination section 192 checks to determine whether any mode has been designated by the user. If a particular mode is found to have been designated by the user, step S233 is reached. In step S233, the content mode determination section 192 determines the user-designated mode as the mode for the content. This brings the process of Fig. 21 to an end.

Illustratively, suppose that the command acquired in step S231 designates image quality priority mode. In such a case, the content mode determination section 192 determines image quality priority mode as the mode for the content in step S233.

If in step S232 no mode is found to have been designated by the user, then a mode is left undetermined. This terminates the process of Fig. 21.

Following the content mode determining process, the content mode recording section 193 records to the content database 61 information indicative of the mode ultimately determined for the content by the process.

In the manner described above, the mode for the content is determined on the basis of the mode linked to the input terminal through which to input a given content or to the input encoding format in which to encode the input content, and in accordance with either the input terminal for input of the content or the input encoding format.

Described below with reference to the flowchart of Fig. 22 are detailed steps constituting the content recording process corresponding to step S163. In step S251, the recording control section 194 checks to determine whether the content of interest is input as an analog signal. If the content is found to be input as an analog signal, step S252 is reached. In step S252, the recording control section 194 tells the video/audio encoder 11 to convert the content to DV format. More specifically, the AD converter 151 in the video/audio encoder 11 converts the analog-signal content into baseband video data. The DV encoder 152 encodes the resulting baseband video data in DV format.

In step S253, the recording control section 194 orders the HDD 16 to record via the HSM 13 the content that was converted to DV format in step S252. This brings the process of Fig. 22 to an end.

If in step S251 the content is not found to be input as an analog signal, that means the content is to be input as digital data. In that case, step S254 is reached in which the recording control section 194 causes the digital-data content to be recorded as is to the HDD 16 through the HSM 13. This terminates the process of Fig. 22. As discussed above in reference to Fig. 18, the digital-data content encoded in DV format is stored into the DV-format file 221 before being recorded to the HDD 16 via the HSM 13; the content encoded in MPEG-2 format is placed into the MPEG-2 format file 222 before being written to the HDD 16 through the HSM 13.

As described above, the content recording process is controlled in such a manner that before being recorded, the input content is encoded either in DV format which is a predetermined encoding format or in DV format or MPEG-2 format which is the format in which the input content is found to have been encoded.

Fig. 23 is a flowchart of detailed steps constituting the content encoding format converting process corresponding to step S164. In step S271, the content mode discrimination section 204 in the encoding control section 195 checks to determine whether the mode determined for the content in step S162 is personal content priority mode on the basis of the mode-indicating information recorded in the content database 61. If personal content priority mode is found to have been designated as the mode for the content, then the process of Fig. 23 is brought to an end then and there, with no change in the content encoding format.

That is, if personal content priority mode is found designated as the mode for the content, the input content is recorded unmodified in the same format.

If in step S271 the mode for the content is not found to be personal content priority mode, then step S272 is reached. In step S272, the content mode discrimination section 204 in the encoding control section 195 checks to determine whether the mode determined for the content in step S162 is image quality priority mode on the basis of the mode-indicating information recorded in the content database 61. If in step S272 image quality priority mode is found to have been designated as the mode for the content, step S273 is reached. In step S273, the encoding control section 195 orders the MPEG-2 encoder 153 to convert the content in question to MPEG-2 format at the highest bit rate defined in the MPEG-2 standard. The process of Fig. 23 is then terminated.

Illustratively, the encoding control section 195 tells the storage manager 14 to read the content in the DV-format file 221 from the HDD 16 through the HSM 13, and orders the DV decoder 171 to decode the retrieved content encoded in DV format. The encoding control section 195 causes the MPEG-2 encoder 153 to encode the decoded content in MPEG-2 format at the highest bit rate defined in the MPEG-2 standard.

The encoding control section 195 proceeds to tell the storage manager 14 to store into the MPEG-2 format file 222 the content encoded in MPEG-2 at the highest bit rate defined in the MPEG-2 standard; the storage manager 14 stores the content thus encoded into the MPEG-2 format file 222 before recording the content to the HDD 16 via the HSM 13.

Alternatively in step S273, the encoding control section 195 may order the MPEG-2 encoder 153 to convert the content in question to MPEG-2 format at a bit rate higher than the bit rate for encoding the content in recording capacity priority mode.

If in step S272 the mode for the content is not found to be image quality priority mode, step S274 is reached. In step S274, the encoding control section 195 checks to determine whether the mode determined for the content in step S162 is DVD priority mode on the basis of the mode-indicating information recorded in the content database 61. If in step S274 the mode for the content is found to be DVD priority mode, step S275 is reached. In step S275, the encoding control section 195 tells the MPEG-2 encoder 154 to convert the content to MPEG-2 format at a bit rate such that the entire content may be recorded to a single optical disk 19 (DVD+R or DVD+RW). The process of Fig. 23 is then terminated.

Illustratively, the encoding control section 195 orders the storage manager 14 to read the content in the DV-format file 221 from the HDD 16 through the HSM 13, and tells the DV decoder 171 to decode the retrieved content encoded in DV format. When the content is to be recorded to the optical disk 19 (DVD+R or DVD+RW) with the recording capacity of 4.7 GB, the encoding control section 195 causes the MPEG-2 encoder 154 to encode the content in MPEG-2 format at a bit rate such that the data size of the encoded content will be as close to 4.7 GB as possible but less than 4.7 GB.

The encoding control section 195 tells the storage manager 14 to store into the MPEG-2 format file 223 the content encoded in MPEG-2 format at the appropriate format so that the whole content will be recorded to a single optical disk 19 (DVD+R or DVD+RW); the storage manager 14 records the encoded content to the HDD 16 through the HSM 13.

In the manner described above, the content set for DVD priority mode need not to have its encoding format changed or its bit rate adjusted before being recorded to a single optical disk 19 (DVD+R or DVD+RW). The content in DVD priority mode can thus be written quickly to the optical disk 19.

If in step S274 the mode for the content is not found to be DVD priority mode, that means the mode for the content is recording capacity priority mode. In this case, step S276 is reached in which the encoding control section 195 checks to determine whether the content in question is HD content. If in step S276 the content is found to be HD content, step S277 is reached. In step S277, the recording control section 195 orders the signal processing section 197 to convert the HD content to SD content. Control is then passed on to step S278.

That is, the encoding control section 195 tells the storage manager 14 to read the content in the DV-format file 221 from the HDD 16 via the HSM 13, and orders the DV decoder 171 to decode the retrieved content encoded in DV format. The encoding control section 195 causes the signal processing section 197 to covert the HD content derived from decoding into an SD content.

If in step S276 the content is not found to be HD content, then step S277 is skipped. Control is passed on to step S278.

In step S278, the encoding control section 195 orders the MPEG-2 encoder 153 to convert the content in question to MPEG-2 format at the lowest bit rate defined in the MPEG-2 standard.

Illustratively, the encoding control section 195 tells the storage manager 14 to read the content in the DV-format file 221 from the HDD 16 via the HSM 13, and orders the DV decoder 171 to decode the retrieved content encoded in DV format. The encoding control section 195 causes the MPEG-2 encoder 154 to encode the decoded content in MPEG-2 format at the lowest bit rate defined in the MPEG-2 standard.

The encoding control section 195 proceeds to tell the storage manager 14 to store into the MPEG-2 format file 223 the content encoded in MPEG-2 format at the lowest bit rate defined in the MPEG-2 standard; the storage manager 14 records the content to the HDD 16 via the HSM 13.

In step S278, the encoding control section 195 may alternatively tell the MPEG-2 encoder 154 to convert the content in question to MPEG-2 format at a bit rate lower than the bit for encoding the content in image quality priority mode.

In step S279, the encoding control section 195 orders the storage manager 14 to delete the original content in recording capacity priority mode from the HDD 16 through the HSM 13. This brings the process of Fig. 23 to an end.

Fig. 24 is a flowchart of detailed steps constituting another content encoding format converting process corresponding to step S164. Steps S291 and S292 are the same as steps S271 and S272 in Fig. 23 and thus will not be described further.

If in step S292 the mode for the content is found to be image quality priority mode, step S293 is reached. In step S293, the encoding control section 195 checks to determine whether the encoding format of the content is DV format on the basis of the information indicative of content encoding formats recorded in the content database 61. If in step S293 the content format is found to be DV format, then the process of Fig. 24 is brought to an end then and there, with no change in the content encoding format.

If in step S293 the content format is not found to be DV format, step S294 is reached. In step S294, the encoding control section 195 causes the AVC encoder 155 to convert the content in question to AVC format at the highest bit rate defined in the AVC standard. The process of Fig. 24 is then terminated.

Illustratively, the encoding control section 195 tells the storage manager 14 to read the content in the MPEG-2 format file 222 from the HDD 16 via the HSM 13, and orders the MPEG-2 encoder 153 to decode the retrieved content encoded in MPEG-2 format. The encoding control section 195 causes the AVC encoder 155 to encode the decoded content in AVC format at the highest bit rate defined in the AVC standard.

The encoding control section 195 orders the storage manager 14 to store into the AVC format file 224 the content encoded in AVC format at the highest bit rate defined in the AVC standard; the storage manager 14 records the content to the HDD 16 through the HSM 13.

In step S294, the encoding control section 195 may alternatively tell the AVC encoder 155 to convert the content in question to AVC format at a bit rate higher than the bit rate for encoding the content in recording capacity priority mode.

If in step S292 the mode for the content is not found to be image quality priority mode, control is passed on to step S295.

Steps S295 through S298 are the same as steps S247 through S277 in Fig. 23 and thus will not be discussed further.

In step S299, the encoding control section 195 causes the AVC encoder 155 to convert the content in question to AVC format at a bit rate lower than the lowest bit rate defined in the MPEG-2 standard. The process of Fig. 24 is then terminated.

Illustratively, the encoding control section 195 tells the storage manager 14 to read the content in the DV-format file 221 or MPEG-2 format file 222 from the HDD 16 via the HSM 13, and orders the DV decoder 171 or MPEG-2 encoder 153 to decode the retrieved content. The encoding control section 195 causes the AVC encoder 155 to encode the decoded content in AVC format at a bit rate lower than the lowest bit rate defined in the MPEG-2 standard.

The encoding control section 195 tells the storage manager 14 to store into the AVC-format file 224 the content encoded in AVC format at a bit rate lower than the lowest bit rate defined in the MPEG-2 standard; the storage manager 14 records the content to the HDD 16 through the HSM 13.

Alternatively in step S299, the encoding control section 195 may order the AVC encoder 155 to convert the content of interest to AVC format at a bit rate lower than the bit rate for encoding the content in image quality priority mode.

In step S300, the encoding control section 195 tells the storage manager 14 to delete the original content in storage capacity priority mode from the HDD 16 via the HSM 13. This brings the process of Fig. 24 to an end.

As described, the input content is controlled to be encoded in the record encoding format or at the bit rate defined by the mode determined for the content.

This eliminates the need for the user to strive to understand what the encoding format or bit rate is all about. When encoding a desired content upon recording, the user need not directly designate a content encoding format or a bit rate; the content can be encoded simply and easily in a suitable format or at an appropriate bit rate.

Described below with reference to the flowchart of Fig. 25 are detailed steps constituting the recompressing process corresponding to step S166 in Fig. 19. In step S321, the recompression section 196 checks to determine whether the mode for the content of interest is personal content priority mode on the basis of the information indicative of content modes stored in the content database 61.

If in step S321 the mode for the content is not found to be personal content priority mode, that means there is no need to recompress the content. In that case, the process of Fig. 25 is terminated then and there.

If in step S321 the mode for the content is found to be personal content priority mode, then step S322 is reached. In step S322, the recompression section 196 orders the signal processing section 197 to submit the content in question to processes for improving image quality and sound quality.

In step S323, the recompression section 196 tells the MPEG-2 encoder 154 to convert the content to MPEG-2 format at a bit rate lower than the bit rate currently in effect.

Illustratively, the encoding control section 195 orders the storage manager 14 to read the content in the DV-format file 221 or MPEG-2 format file 222 from the HDD 16 through the HSM 13, and causes the DV decoder 171 or MPEG-2 encoder 153 to decode the retrieved content. The encoding control section 195 causes the MPEG-2 encoder 154 to encode the decoded content in MPEG-2 format at a bit rate lower than the bit rate currently in effect.

The encoding control section 195 proceeds to tell the storage manager 14 to store the encoded content into the MPEG-2 file 222; the storage manager 14 records the content to the HDD 16 through the HSM 13.

Alternatively, the content of interest may be encoded in AVC format at a bit rate lower than the currently effective bit rate.

In step S324, the recompression section 196 acquires from the user a command specifying whether or not to delete the original content. Illustratively, the recompression section 196 causes the monitor 25 to display an image prompting the user to input the command specifying whether the original content is to be deleted or not. The command is acquired from the user in the form of a signal entered through a switch or from the light-receiving part of a remote controller, not shown.

In step S325, the recompression section 196 checks to determine whether the original content is designated to be deleted. If the original content is found designated for deletion, step S326 is reached. In step S326, the recompression section 196 orders the storage manager 14 to delete the original content from the HDD 16 via the HSM 13. The process of Fig. 25 is then terminated.

If in step S325 the original content is not found designated for deletion, there is no need to delete the content. Then, step S326 is skipped. This brings the process of Fig. 25 to an end.

As described, given the command from the user to designate recompression of the content, that content in personal content priority mode which would ordinarily be recorded unmodified is recompressed so that its data size may be further reduced.

A recorded content may be transmitted over the network 73.

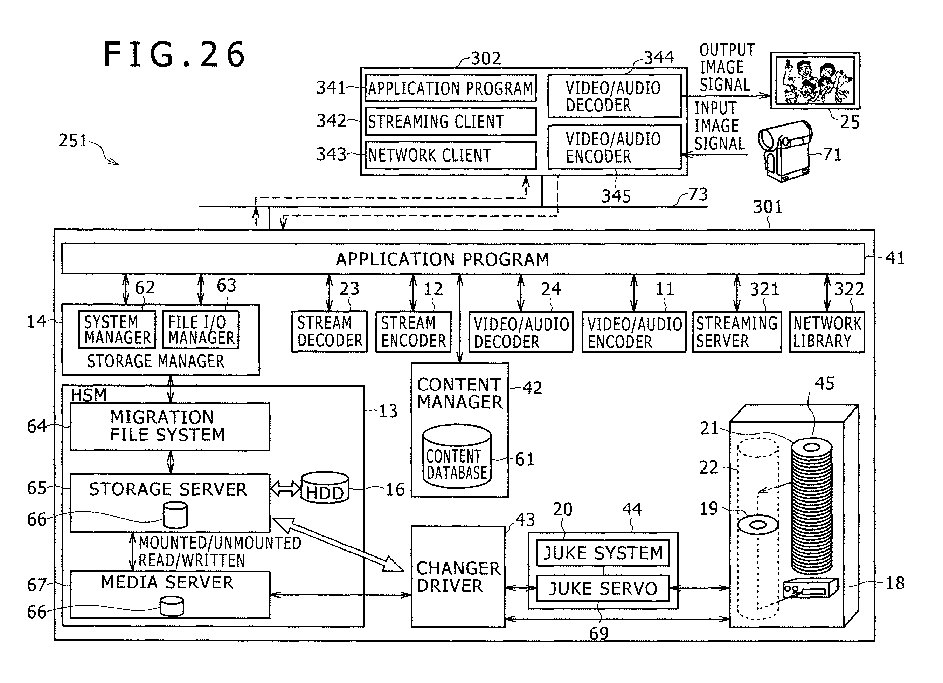

Fig. 26 is a block diagram showing a configuration of a recording and reproducing system 251 practiced as another embodiment of the present invention. Of the reference characters in Fig. 26, those already used in Fig. 1 designate like or corresponding component parts, and their descriptions are omitted where redundant.

The recording and reproducing system 251 includes a server 301 and a client 302 connected to the server 301 through the network 73.

The server 301 is structured to include a video/audio encoder 11, a stream encoder 12, an HSM 13, a storage manager 14, a stream decoder 23, a video/audio decoder 24, an application program 41, a content manager 42, a changer driver 43, a jukebox control device 44, a jukebox 45, a streaming server 321, and a network library 322.

The application program 41 links one of DVD priority mode, image quality priority mode, personal content priority mode, and recording capacity priority mode to the recording and reproducing system 251 as a whole, to the input terminal through which to input a content, or to the input encoding format in which to encode the input content, on the basis of the command from the user. The application program 41 further determines the mode for the content of interest on the basis of the mode linked to the recording and reproducing system 251 as a whole, to the input terminal through which to input the content, or to the input encoding format in which to encode the input content, and in accordance with either the input terminal for input of the content or the input encoding format. Alternatively, the application program 41 determines the mode for the content based on the command from the user.

The application program 41 controls encoding of the input content in the record encoding format or at the bit rate defined in the mode determined as described.

The application program 41 orders the streaming server 321 to receive a stream containing video data sent from the client 302 over the network 73. The application program 41 forwards the stream received by the streaming server 321 to the storage manager 14.

Furthermore, the application program 41 causes the streaming server 321 to send the stream supplied from the storage manager 14 to the client 302 over the network 73.

Using a suitable procedure described in the network library 322, the streaming server 321 sends the stream fed from the application program 41 to the client 302 over the network 73. The streaming server 321 receives the stream sent from the client 302 via the network 73. The received stream is sent from the streaming server 321 to the application program 41.

Upon receipt of data from the client 302 via the network 73 requesting reproduction of a content starting from a particular location (i.e., this is a stream transmission request), the streaming server 321 sends the stream to the client 302 over the network 73 in such a manner as to let the content be reproduced starting from the requested location.

The network library 322 has procedures described inside which are used to send and receive streams and data to and from the client over the network 73.

The network 73 may be a LAN (local area network) such as a so-called home network, the Internet, a public switched network, or a dedicated line based on wireless or wired transmission media. As such, the network 73 carries diverse kinds of data (including streams).

The client 302 is structured to include an application program 341, a streaming client 342, a network client 343, a video/audio decoder 344, and a video/audio encoder 345.

The application program 341 has a user interface capability to communicate with the user. Through the interface, the application program 341 acquires commands from the user and notifies the user of diverse kinds information about the client 302. The application program 341 controls the client 302 as a whole.

The streaming client 342 receives a stream from the server 301 over the network 73 and forwards the received stream to the video/audio decoder 344. The network client 343 exchanges diverse kinds of data with the server 301 over the network 73. The network client 343 takes the stream from the video/audio encoder 345 and sends the stream to the server 301 via the network 73. The network client 343 also sends data requesting reproduction of a particular content starting from a desired location (i.e., stream transmission request) to the server 301 through the network 73.

The video/audio decoder 344 separates the stream into video and audio data. The video/audio decoder 344 decodes the video data and audio data from their encoded format into baseband video and audio data. The video/audio decoder 344 then supplies the monitor 25 with an output video signal and an audio signal (not shown) derived from the baseband image and audio data thus acquired.

The video/audio encoder 345 obtains an input video signal and an audio signal from the video camera 71, and converts the obtained input video signal and audio signal into baseband video and audio data. The video/audio encoder 345 encodes the resulting baseband video and audio data and further multiplexes the encoded video and audio data into a stream. The stream thus created is supplied from the video/audio encoder 345 to the network client 343.

As described, the server 301 can rapidly send a stream to the client 302 over the network 73 in such a manner as to let the content be reproduced from the desired location. The server 301 also receives a content stream sent from the client 302 over the network 73.

The server 301 further records the content sent from the client 302 via the network 73. It is also possible for the client side to encode a given content so that the server side may record the content thus encoded.

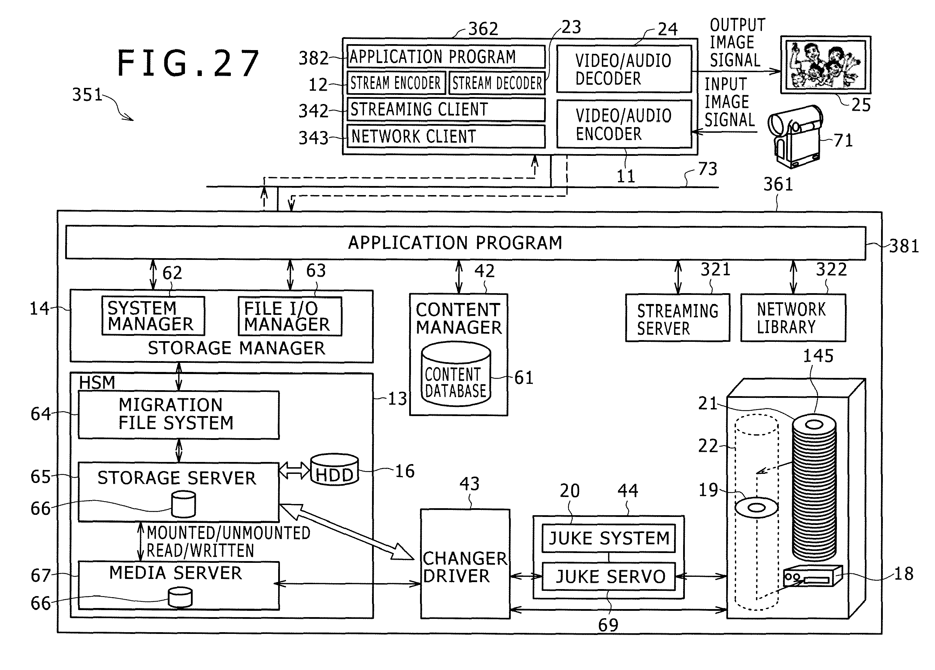

Fig. 27 is a block diagram showing a configuration of a recording and reproducing system 351 practiced as another embodiment of the present invention. Of the reference characters in Fig. 27, those already used in Fig. 26 designate like or corresponding component parts, and their descriptions are omitted where redundant.

The recording and reproducing system 351 includes a server 361 and a client 362 connected to the server 361 via the network 73.

The server 361 is structured to include HSM 13, a storage manager 14, a content manager 42, a changer driver 43, a jukebox control device 44, a jukebox 45, a streaming server 321, a network library 322, and an application program 381.

The application program 381 causes the streaming server 321 to receive a stream containing video and audio data sent from the client 362 over the network 73. The application program 381 forwards the stream received by the streaming server 321 to the storage manager 14.

The application program 381 further orders the streaming server 321 to send out the stream fed from the storage manager 14 over the network 73.

The client 362 is structured to include a video/audio encoder 11, a stream encoder 12, a stream decoder 23, a video/audio decoder 24, a streaming client 342, a network client 343, and an application program 382.

The application program 382 controls the client 302 as a whole.

As in the case of the application program 41, the application program 382 links one of DVD priority mode, image quality priority mode, personal content priority mode, and recording capacity priority mode to the recording and reproducing system 351 as a whole, to the input terminal through which to input a content, or to the input encoding format in which to encode the input content, on the basis of the command from the user. The application program 382 further determines, as with the application program 41, the mode for the content of interest on the basis of the mode linked to the recording and reproducing system 351 as a whole, to the input terminal through which to input the content, or to the input encoding format in which to encode the input content, and in accordance with either the input terminal for input of the content or the input encoding format. Alternatively, as with the application program 41, the application program 382 determines the mode for the content based on the command from the user.

Like the application program 41, the application program 382 controls the encoding of the input content in the record encoding format or at the bit rate defined in the mode determined as described.

The application program 382 tells the streaming client 342 to receive the stream sent from the server 361 over the network 73. The application program 382 forwards the stream received by the streaming client 342 to the stream decoder 23.

The application program 382 further causes the network client 343 to send the stream fed from the stream encoder 12 to the server 361 via the network 73.

Fig. 28 is a block diagram showing a typical structure of the application program 382. The application program 382 is made up of a mode linking section 191, a content mode determination section 192, a content mode recording section 193, an encoding control section 195, a recompression section 196, a signal processing section 197, and a communication control section 391. Of the reference characters in Fig. 28, those already used in Fig. 17 designate like or corresponding component parts, and their descriptions are omitted where redundant.

The communication control section 391 controls the streaming client 342 so as to receive the stream sent from the server 361 over the network 73. The communication control section 391 also controls the network client 343 in order to send the stream fed from the stream encoder 12 to the server 361 over the network 73.

In this manner, the server 361 encodes contents and records the encoded contents.

The HDD 16 as the primary storage may be replaced by some other high-speed recording medium such as a semiconductor memory. The optical disk 19 as the secondary memory may be replaced by some other suitable recording medium such as magnetic disks or magnetic tapes that are less expensive per capacity unit than the primary storage.

As described, where the format in which to encode contents is defined by the mode in effect, the content of interest is encoded accordingly before being recorded. More specifically, one of a plurality of modes is linked either to an input terminal through which to input the content or to an input encoding format for encoding the input content in accordance with the command from the user, each of the modes being used to determine either the record encoding format for encoding the content upon recording or the bit rate for recording the content; the mode appropriate for the content is determined based on the mode linked either to the input terminal or to the input encoding format and in keeping with either the input terminal or the input encoding format; and encoding of the input content is controlled by use of either the record encoding format or the bit rate designated by the mode thus determined. In such a case, the content of interest is encoded before being recorded simply and easily using the appropriate encoding format or bit rate.

Where the format in which to encode contents is defined by the mode in effect, the content of interest is encoded accordingly. As in the case above, one of a plurality of modes is linked either to an input terminal through which to input the content or to an input encoding format for encoding the input content in accordance with the command from the user, each of the modes being used to determine either the record encoding format for encoding the content upon recording or the bit rate for recording the content; the mode appropriate for the content is determined based on the mode linked either to the input terminal or to the input encoding format and in keeping with either the input terminal or the input encoding format; and encoding of the input content is controlled by use of either the record encoding format or the bit rate designated by the mode thus determined. Also in this case, the content of interest is encoded simply and easily using the appropriate encoding format or bit rate.

The content encoding format is not limited to DV format, MPEG format or AVC format. Any other format may be adopted as long as it is suitable for encoding contents.

The series of steps or processes described above may be executed either by hardware or by software. For the software-based processing to take place, the programs constituting the software may be either incorporated beforehand in dedicated hardware of a computer for program execution or installed upon use from a suitable recording medium into a general-purpose personal computer or like equipment capable of executing diverse functions based on the installed programs.

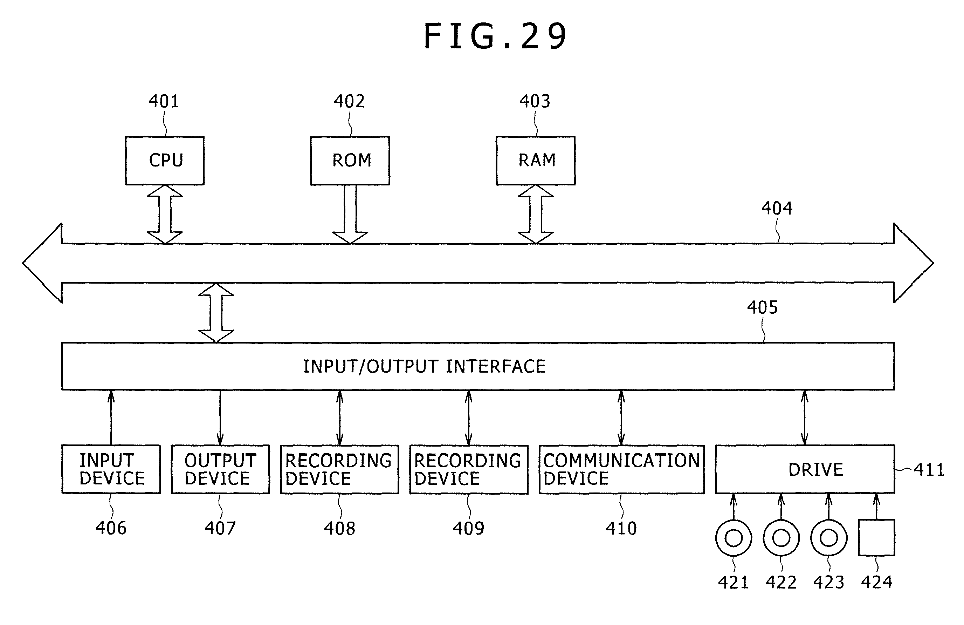

Fig. 29 is a block diagram showing a typical structure of a personal computer capable of executing the above-described series of steps or processes using programs. A CPU (central processing unit) 401 carries out diverse processes in accordance with the programs kept in a ROM (read-only memory) 402 or a recording device 408 or 409. A RAM (random access memory) 403 accommodates the programs or data being executed or operated on by the CPU 401 accordingly. The CPU 401, ROM 402 and RAM 403 are interconnected by a bus 404.

An input/output interface 405 is connected to the CPU 401 through the bus 404. The input/output interface 405 is also connected to an input device 406 constituted illustratively by a keyboard, a mouse and a microphone, as well as to an output device 407 typically composed of a display and speakers. The CPU 401 performs various processes in response to commands that are input from the input device 406. The CPU 401 outputs the result of its processing to the output device 407.

The recording device 408 connected to the input/output interface 405 corresponds illustratively to a HDD 115 that records the programs or data executed or operated on by the CPU 401. The recording device 409 represents illustratively the jukebox 45 that records various items of data and the programs carried out by the CPU 401. A communication device 410 communicates with an external apparatus such as the client 302 through the Internet or over the network 73 such as a LAN.

Programs may be acquired through the communication device 410. The programs thus obtained may then be recorded to the recording device 408 or 409.

A drive 411 is connected to the input/output interface 405. When loaded with a magnetic disk 421, an optical disk 422, a magneto-optical disk 423 or a semiconductor memory 424, the drive 411 drives the loaded medium and acquires programs and/or data therefrom. The programs and data thus acquired are transferred to and recorded by the recording device 408 or 409 as an occasion is demanded.

In the foregoing description, the content of interest was mentioned to be "encoded in MPEG-2 format at the highest bit rate defined in the MPEG-2 standard," or "encoded in MPEG-2 format at the lowest bit rate defined in the MPEG-2 standard." However, these cases are only examples and are not limitative of the present invention. Alternatively, the content may be encoded in MPEG-2 format at a bit rate which falls within "the bit rate range defined in the MPEG-2 standard and which is relatively high" or "the bit rate range defined in the MPEG-2 standard and which is relatively low". More specifically, the content may be encoded in MPEG-2 format at a bit rate which falls within "the bit rate range defined in the MPEG-2 standard and which is higher" or "the bit rate range defined in the MPEG-2 standard and which is lower than the median of that range".

As shown in Fig. 29, the recording media which are offered to users apart from their computers and which accommodate the programs designed to perform the above-described series of steps and processes are constituted not only by such package media as the magnetic disk 421 (including flexible disks), optical disk 422 (including CD-ROM (compact disc read-only memory) and DVD (digital versatile disc)), magneto-optical disk 423 (including MD (Mini-disc; registered trademark)), or semiconductor memory 424; but also by such recording media as the ROM 402, the hard disks contained in the recording device 408, or the optical disks 19 included in the recording device 409. The latter recording media are preinstalled in the computer when offered to the users in a manner having the programs stored thereon.

The programs for carrying out the above-described series of steps and processes may alternatively be installed into the computer via such interfaces as routers or modems and through wired or wireless communication media such as local area networks, the Internet, or digital satellite broadcast links.

In this specification, the steps that describe the programs stored on the recording medium represent not only the processes that are to be carried out in the depicted sequence (i.e., on a time series basis) but also processes that may be performed parallelly or individually and not chronologically.

In this specification, the term "system" refers to an entire configuration made up of a plurality of component devices.

It should be understood by those skilled in the art that various modifications, combinations, subcombinations and alterations may occur depending on design requirements and other factor in so far as they are within the scope of the appended claims or the equivalents thereof.

## Claims

1. A recording apparatus comprising: linking means for linking one of a plurality of modes either to an input terminal through which to input a content or to an input encoding format for encoding the input content in accordance with a command from a user, each of said modes being used to determine either a record encoding format for encoding said content upon recording or a bit rate for recording said content;
determination means for determining the mode appropriate for said content based on the mode linked either to said input terminal or to said input encoding format and in keeping with either said input terminal or said input encoding format; and
encoding control means for controlling encoding of said input content by use of either said record encoding format or said bit rate designated by the determined mode.

2. The recording apparatus according to claim 1, further comprising:
recording control means for controlling recording of said input content either in a predetermined encoding format or in said input encoding format,
wherein said encoding control means controls encoding of the recorded content either in said record encoding format or at said bit rate.

3. The recording apparatus according to claim 1, wherein each of said modes designates the number of pixels for said content to be recorded,
said recording apparatus further comprising signal processing means for subjecting said content to signal processing in such a manner as to attain said number of pixels designated by said determined mode.

4. The recording apparatus according to claim 1, wherein said record encoding format and said bit rate are determined by one of said modes in such a manner that said content as a whole will be stored on a content storage medium for storing said content.

5. The recording apparatus according to claim 1, wherein said determination means determines said mode appropriate for said content in accordance with said command from said user.

6. A recording method comprising the steps of: linking one of a plurality of modes either to an input terminal through which to input a content or to an input encoding format for encoding the input content in accordance with a command from a user, each of said modes being used to determine either a record encoding format for encoding said content upon recording or a bit rate for recording said content;
determining the mode appropriate for said content based on the mode linked either to said input terminal or to said input encoding format and in keeping with either said input terminal or said input encoding format; and
controlling encoding of said input content by use of either said record encoding format or said bit rate designated by the determined mode.

7. A computer readable medium having contained therein computer readable instructions that when executed by a processor perform steps comprising:
linking one of a plurality of modes either to an input terminal through which to input a content or to an input encoding format for encoding the input content in accordance with a command from a user, each of said modes being used to determine either a record encoding format for encoding said content upon recording or a bit rate for recording said content;
determining the mode appropriate for said content based on the mode linked either to said input terminal or to said input encoding format and in keeping with either said input terminal or said input encoding format; and
controlling encoding of said input content by use of either said record encoding format or said bit rate designated by the determined mode.

8. An encoding apparatus comprising: linking means for linking one of a plurality of modes either to an input terminal through which to input a content or to an input encoding format for encoding the input content in accordance with a command from a user, each of said modes being used to determine either a record encoding format for encoding said content upon recording or a bit rate for recording said content;
determination means for determining the mode appropriate for said content based on the mode linked either to said input terminal or to said input encoding format and in keeping with either said input terminal or said input encoding format; and
encoding control means for controlling encoding of said input content by use of either said record encoding format or said bit rate designated by the determined mode.

9. The encoding apparatus according to claim 8, further comprising:
transmission control means for controlling transmission of the encoded content over a network to a recording apparatus for recording said content.

10. An encoding method comprising the steps of: linking one of a plurality of modes either to an input terminal through which to input a content or to an input encoding format for encoding the input content in accordance with a command from a user, each of said modes being used to determine either a record encoding format for encoding said content upon recording or a bit rate for recording said content;
determining the mode appropriate for said content based on the mode linked either to said input terminal or to said input encoding format and in keeping with either said input terminal or said input encoding format; and
controlling encoding of said input content by use of either said record encoding format or said bit rate designated by the determined mode.
